# EUROPÄISCHE PATENTSCHRIFT

(11) **EP 3 774 086 B1**
(45) Veröffentlichungstag und Bekanntmachung des Hinweises auf die Patenterteilung: **16.03.2022**
(21) Anmeldenummer: 19718220.7
(22) Anmeldetag: 10.04.2019
(51) Int. Cl.: B07B 1/14, B07B 4/02, B07B 13/00, B07B 13/04, B07B 13/10, B07B 15/00, B03B 9/04

(54) **SORTIERVORRICHTUNG ZUM AUSSORTIEREN VON MÜNZEN**
SORTING DEVICE FOR SORTING OUT COINS
DISPOSITIF DE TRI DESTINÉ À TRIER DES PIÈCES

(30) Priorität: 10.04.2018 DE 102018108511; 03.04.2019 DE 102019108732
(43) Veröffentlichungstag der Anmeldung: 17.02.2021
(73) Patentinhaber: Schons, Georg, 78253 Eigeltingen (DE); Schons, Marc, 78253 Eigeltingen (DE)
(72) Erfinder: Schons, Georg, 78253 Eigeltingen (DE); Schons, Marc, 78253 Eigeltingen (DE)
(74) Vertreter: Patent- und Rechtsanwälte Behrmann Wagner PartG mbB
(86) Internationale Anmeldenummer: PCT/EP2019/059072
(87) Internationale Veröffentlichungsnummer: WO 2019/197460

(56) Entgegenhaltungen:
- EP-A1- 0 550 867
- WO-A1-2013/060349
- DE-A1-102013 105 560
- JP-U- H0 663 152

## Beschreibung

Die vorliegende Erfindung betrifft eine Sortiervorrichtung zum Aussortieren von Münzen aus einer Materialschüttung, insbesondere einer Müllverbrennungsschlacke und/oder einer Metallschüttung, besonders bevorzugt einer Schwermetallschüttung und/oder NE-Metallschüttung, gemäß dem unabhängigen Patentanspruch 1, wobei bevorzugt zunächst eine NE-Metallschüttung erzeugt oder aufkonzentriert wird und anschließend aus dieser NE-Metallschüttung Münzen aussortiert werden. Weiter betrifft die vorliegende Erfindung eine Wirbelstromabscheidevorrichtung gemäß dem Anspruch 18. Ferner betrifft die Erfindung auch die Verwendung einer Sortiervorrichtung zum Aussortierung von Münzen aus einer Materialschüttung und die Verwendung einer Wirbelstromabscheidevorrichtung zum Aussortieren von Münzen aus einer Materialschüttung.

Es ist bekannt, dass Schlacke aus Müllverbrennungsanlagen oder thermischen Müllverwertungsanlagen Münzen enthält. Gleiches gilt beispielsweise für Material- oder Metallschüttungen aus der KFZ-Verwertung. Bisher wurde zur technischen Rückgewinnung der Münzen aus einer Müllverbrennungsschlacke zunächst in einem ersten Arbeitsschritt aus der Schlacke eine Metallfraktion aussortiert, aus der anschließend mit geeigneten Vorrichtungen und Verfahren oder per Hand ein Münzkonzentrat oder Münzen aussortiert oder ausgefiltert wurden. Aufgrund der Tatsache, dass für eine Tonne durchschnittlichen Hausmülls von einem Münzanteil von wenigen Gramm ausgegangen werden kann oder ausgegangen werden muss, war der bisherige Ansatz zur Münzrückgewinnung in einem großtechnischen Verfahren oder mit einer großtechnischen Anlage derart ausgerichtet, dass die zum Einsatz kommenden Vorrichtungen, sowohl zur Erzeugung einer Metallschüttung aus der Schlacke der Müllverbrennungsanlagen als auch zur Erzeugung oder Aussortierung eines Münzkonzentrats große Materialdurchsätze bewerkstelligen können musste.

Eine derartige Vorrichtung zum Aussortieren von Münzen aus einer Metallschüttung, die auf die Anmelderin zurück geht, ist beispielsweise aus der internationalen Patentanmeldung WO 2013/060349 A1 bekannt. Die dort beschriebene Vorrichtung sowie das Verfahren und insbesondere deren Einbettung in den Gesamtrückgewinnungsprozess aus einer Müllverbrennungsschlacke oder Müllverbrennungsschlackefraktion hat sich jedoch in mehrerlei Hinsicht als nachteilig erwiesen.

Einerseits ist die bekannte Aussortierung von Münzen nachteilig, weil dafür ein entsprechend hoher Aufwand bzgl. der eingesetzten Vorrichtungen betrieben werden muss und weil durch die einzelnen Arbeitsschritte und deren Zwischenprodukte auch eine platzintensive Lagerung und eine arbeitsintensive Zwischenbehandlung der einzelnen Produkte der jeweiligen Trennungs- oder Sortierschritte stattfinden muss. Beispielsweise muss die zu erzeugende Metallschüttung aufgefangen, gelagert, ggf. zu einer weiteren Sortiervorrichtung transportiert, dort wieder verarbeitet, insbesondere die Münzen aussortiert oder ein Münzkonzentrat erzeugt werden und dieses schließlich ebenfalls wieder gesammelt und bevorratet oder gelagert werden.

Dies ist insbesondere auch deshalb nachteilig, da die Schlacke aber auch die ggf. aussortierte Metallschüttung aggressive oder zumindest stark verschleißfördernde Eigenschaften aufweist. Beispielsweise kann der in der Schlacke enthaltene reaktive Kalk sowie die in der Schlacke enthaltene Restfeuchtigkeit zu einem Verkleben von Vorrichtungsbestandteilen, insbesondere Bändern, und/oder die Feuchtigkeit der Schlacke zur Korrosion von Vorrichtungsteilen beitragen. Auch die Bestandteile einer Metallschüttung können beispielsweise durch spitze oder scharfe Bereiche oder Abschnitte der Gegenstände der Metallschüttung einen Verschleiß der zum Einsatz kommenden Vorrichtungen befördern und damit den Wartungs- und/oder Instandhaltungsaufwand für die Vorrichtungen zur Münzrückgewinnung aus einer Müllverbrennungsschlacke deutlich erhöhen. Wie oben bereits angedeutet, sind jedoch diese Nachteile, also die hohen Betriebskosten gerade bei dem geringen Münzanteil an dem thermisch verwerteten Müll, insbesondere thermisch verwerteten Hausmüll, besonders kritische Parameter bzgl. einer wirtschaftlich sinnvollen Münzrückgewinnung.

Aus der EP 2 742 491 A1, welche auf den Anmelder zurückgeht, ist bereits eine Sortiervorrichtung zum Aussortieren von Münzen aus einer Materialschüttung bekannt, bei der zumindest ein Sortierspalt für Münzen von einer Walze begrenzt ist und bei der weiter mittels eines Antriebs die Walze derart um eine Drehachse rotierbar ist, dass nicht durch den Sortierspalt förderbare Gegenstände von der Walze in eine Richtung vom Sortierspalt weg kraftbeaufschlagt werden.

Aus der CH 582 546 ist zudem bereits ein Wirbelstromscheider bekannt, der eine Flugbahnseparatoreinrichtung aufweist.

Weiterhin sind zum technologischen Hintergrund noch die DE 10 2013 105 560 A1, die EP 0 550 867 A1 und die JP H06 63152 U bekannt.

Die DE 10 2013 105 560 A1 beschreibt ein Verfahren sowie Vorrichtung zum Aussortieren von Wertteilen aus einer Metallschüttung. Die EP 0 550 867 A1 offenbart eine Vorrichtung zum Abtrennen von nichtmagnetisierbaren Metallen aus einem Feststoffgemisch. Die JP H06 63152 U lehrt einen Wirbelstromscheider.

Vor diesem Hintergrund stellt sich die vorliegende Erfindung der Aufgabe, eine Sortiervorrichtung zum Aussortierung von Münzen aus einer Materialschüttung derart weiterzubilden, dass eine effektivere, insbesondere auch kosteneffektivere Rückgewinnung von Münzen erreicht werden kann.

Die Aufgabe wird erfindungsgemäß dadurch gelöst, dass die Münzrückgewinnung zunächst in die Metallrückgewinnung dadurch integriert wird, dass die Sortiervorrichtung zumindest einen Sortierspalt für Münzen aufweist, der jeweils von zumindest einer Walze begrenzt ist, die mittels eines Antriebs derart um eine Drehachse rotierbar ist, dass nicht durch den Sortierspalt förderbare Gegenstände, insbesondere Nichteisen-Metallgegenstände von der Walze in eine Richtung vom Sortierspalt weg kraftbeaufschlagt werden, wobei die Sortiervorrichtung in an sich bekannte oder existierende Abwurfhauben für eine Wirbelstromabscheidevorrichtung integrierbar ist, die in einem Haubeninnenraum eine, insbesondere, zumindest teilweise, verstellbare, Flugbahnseparatoreinrichtung aufweist, wobei in oder an der Abwurfhaube die zumindest eine Walze derart bzgl. der Flugbahnseparatoreinrichtung angeordnet ist, dass eine von der Flugbahnseparatoreinrichtung aus der Materialschüttung abseparierte Nichteisen-Metallfraktion durch die Gewichtskraft der Nichteisen-Metallgegenstände in Richtung des Sortierspalts geführt wird.

Die Grundidee der vorliegenden Erfindung basiert also einerseits auf dem Versuch, ausgehend von einer Materialschüttung die Trennung von Metallen, insbesondere Nichteisen-Metallen, unmittelbar vor der Aussortierung von Münzen aus einer Metallfraktion, insbesondere einer Nichteisen-Metallfraktion, durchzuführen, um damit gleichzeitig Arbeitsfläche und Arbeitsraum für entsprechende Vorrichtungen, Lagerfläche und Lagermittel für die Zwischenlagerung von Zwischenprodukten und Arbeitskräfte für die Behandlung und Bearbeitung von Zwischenprodukten einzusparen. Dabei hat sich in besonders unerwarteter und kontraintuitiver Weise beim Zustandekommen der Erfindung herausgestellt, dass zum Erreichen des gewünschten Ziels oder zur Lösung der o.g. Aufgabe gerade eine Abkehr von Maschinen oder Vorrichtungen mit einem großen Materialdurchsatz zum Ziel führt.

Denn wie oben einleitend bereits beschrieben, sind die bekannten Vorrichtungen, beispielsweise die zum Stand der Technik genannte Vorrichtung, auf einen großen Materialdurchsatz hin optimiert. Dies bedeutet, dass die Vorrichtungen aus dem Stand der Technik mit unter dazu eingerichtet sind, mehr als 500kg, insbesondere mehr als 1t Metallschüttung pro Stunde zu verarbeiten oder durchzusetzen. Ein derart hoher Durchsatz ist mit der erfindungsgemäßen Sortiervorrichtung keinesfalls erforderlich.

Diese Tatsache ist dem Umstand geschuldet, dass die Sortiervorrichtung durch das Vorsehen einer Abwurfhaube und einer in der Abwurfhaube oder im Haubeninneren der Abwurfhaube angeordnete Flugbahnseparatoreinrichtung für den Einsatz oder für eine Anwendung zusammen mit einer Wirbelstromabscheidevorrichtung oder einer gleichwirkenden Abscheidevorrichtung eingerichtet ist, welche jedoch durch die grundlegenden Wirkprinzipien des Abscheidevorgangs, insbesondere eine Nichteisen-Metallfraktion, nicht in der Lage sind, die Massendurchsätze zu erreichen, wie sie für Vorrichtungen aus dem Stand der Technik bekannt sind oder als vorteilhaft beschrieben werden. Die erfindungsgemäße Erkenntnis liegt also gerade auch darin, einen erheblich verminderten Durchsatz einer Materialschüttung in Kauf zu nehmen oder in Kauf nehmen zu können, wenn dadurch jedoch eine mehrstufige Trennung oder Sortierung in einem ununterbrochenen Verfahren oder in unmittelbar aneinander anschließende Verfahrensschritte realisiert werden kann, ohne dass zusätzliche Transport- oder Zuführeinrichtungen sowie keine zusätzlichen Bearbeitungsschritte eines Bedienpersonals, beispielsweise Lagerungs- und Transportschritte, erforderlich sind.

Die mehrstufige, insbesondere zweistufige Sortierung wird bei der vorliegenden Sortiervorrichtung einerseits durch die Flugbahnseparatoreinrichtung gewährleistet, welche die einzelnen Fraktionen der Materialschüttung bereits aufgrund unterschiedlicher kinetischer Eigenschaften, insbesondere Flugbahneigenschaften oder Trajektorien trennt. Andererseits wird die zusammenhängende oder ineinander übergehende mehrstufige Sortierung durch die der Flugbahnseparatoreinrichtung bezogen auf die Flugbahn von Nichteisen-Metallen der Materialschüttung nachgeordnete, einen Sortierspalt begrenzende Walze gewährleistet, bei der die Gewichtskraft der Gegenstände der Nichteisen-Metallfraktion eine selbstständige oder automatische Zuführung zu der Walze und dem zugeordneten Sortierspalt gewährleistet, wozu die Walze und der von der zumindest einen Walze begrenzte, zumindest eine Sortierspalt, entsprechend bzgl. der Flugbahnseparatoreinrichtung angeordnet ist.

Wie bereits angedeutet, ist die vorgeschlagene Sortiervorrichtung insbesondere für das Zusammenwirken mit einer Wirbelstromabscheidevorrichtung geeignet. Grundsätzlich kann jedoch auch eine andere Abscheide- oder Trennvorrichtung mit der Sortiervorrichtung zusammenwirken, die eine Trennung der unterschiedlichen Fraktionen der Materialschüttung in unterschiedliche, insbesondere materialspezifische Flugbahnen ermöglicht, sodass zumindest eine Nichteisen-Metallfraktion über eine Flugbahnseparatoreinrichtung absepariert und dem durch die zumindest eine Walze begrenzten Sortierspalt über die Gewichtskraft der Nichteisen-Metallgegenstände zugeführt werden kann.

Als Walze im Sinne der vorliegenden Erfindung können ggf. Bürstenwalzen zum Einsatz kommen. Alternativ können aber auch glatte oder profilierte Walzen, beispielsweise mit einer metallischen Oberfläche oder einer Elastomer-Oberfläche zum Einsatz kommen. Als Antrieb der zumindest einen Walze kann bevorzugt ein elektromechanischer Antrieb verwendet werden. Die Flugbahnseparatoreinrichtung kann bevorzugt ein bzgl. der Position und Ausrichtung in der Abwurfhaube bewegliches oder verstellbares Prallblech oder eine entsprechende Prallplatte zum Einsatz kommen. Zudem kann die Flugbahnseparatoreinrichtung einen oder mehrere Prallvorhänge beispielsweise aus Gummi oder einem vergleichbaren Material aufweisen. Dabei kann vorgesehen sein, dass die Prallplatte grundsätzlich die Trenn- oder Sortierfunktion zwischen einzelnen Fraktionen der Materialschüttung, insbesondere die Abseparierung oder Aussortierung einer Nichteisen-Metallfraktion gewährleistet, weshalb auch die Verstellbarkeit oder Bewegbarkeit der Prallplatte besonders vorteilhaft ist, um eine saubere, möglichst vollständige Trennung oder Sortierung erreichen zu können. Bezüglich der Prallvorhänge, die im weiteren Sinne als Begrenzung der möglichen Flugbahnen der Fraktionen der Materialschüttung dienen, kann sowohl eine statische als auch eine bewegliche oder verstellbare Anordnung an oder in der Abwurfhaube, insbesondere an oder in dem Haubeninnenraum vorgesehen sein.

Gemäß einer ersten vorteilhaften Ausgestaltung der Sortiervorrichtung kann vorgesehen sein, dass sich die Drehachse der zumindest einen Walze parallel zu einer Eintrittsfläche der Abwurfhaube, insbesondere waagerecht, erstreckt. Dies kann einerseits eine besonders einfache Anordnung der zumindest einen Walze in der Abwurfhaube ermöglichen. Außerdem kann dadurch vorteilhaft eine Anpassung der erfindungsgemäßen Sortiervorrichtung an die jeweilige Abmessung der Eintrittsfläche, insbesondere an die Breite der Eintrittsfläche der Abwurfhaube durch eine Anpassung der Länge der Drehachse und damit durch die Anpassung der Länge der Walze an die Breite der Eintrittsfläche der Abwurfhaube erreicht werden. Dadurch wird eine optimale Anpassung der Sortiervorrichtung an bereits bestehende Trenn- oder Abscheidevorrichtungen erreicht, da durch die stufenlose, variierbare Länge der Drehachse der zumindest einen Walze und der entsprechenden Anpassung der Länge der Walze selbst eine weitestgehend freie Anpassung an die benötigten Abmessungen der Abwurfhaube, und damit an die benötigte Eintrittsfläche der Abwurfhaube erreicht werden kann.

Eine parallel zur Eintrittsfläche der Abwurfhaube ausgerichtete, insbesondere waagerechte Ausrichtung der zumindest einen Drehachse der Walze führt in besonders vorteilhafter Weise auch dazu, dass die nicht den oder die Sortierspalte passierenden Nichteisen-Metallgegenstände bzw. NE-Metallgegenstände der NE-Metallfraktion entlang der Drehachse und damit ebenfalls parallel zur Eintrittsfläche der Abwurfhaube kraftbeaufschlagt und abtransportiert werden können. Dadurch wird ermöglicht, die nicht durch den Sortierspalt oder die Sortierspalten hindurchgetretenen NE-Metallgegenstände an eine Austrittsöffnung seitlich in einer Seitenwand der Abwurfhaube auszutragen.

Alternativ kann auch vorgesehen sein, dass die Drehachse einen Winkel zwischen 3° und 5° mit der Waagerechten einschließt. Die kann je nach Ausführungsform bei einer parallelen oder nicht parallelen Ausrichtung der Drehachse zur Eintrittsebene realisiert werden. Über die einseitig abfallende oder schräge Ausrichtung der Drehachse oder Drehachsen kann die Verweildauer im Bereich des Sortierspalts und die Austragsgeschwindigkeit der NE-Metallgegenstände beeinflusst und damit die Sortierqualität verändert werden.

Gemäß einer bevorzugten Ausgestaltung der Sortiervorrichtung kann zudem vorgesehen sein, dass der Sortierspalt von einer Walze und einer Prallplatte, insbesondere aus rostfreiem Stahl, der Flugbahnseparatoreinrichtung begrenzt wird. Mit anderen Worten ausgedrückt bedeutet dies, dass in einer Ausführungsform eine einzelne Walze zusammen mit einer Edelstahlprallplatte der Flugbahnseparatoreinrichtung einen Sortierspalt ausbilden und begrenzen kann. Dazu ist eine entsprechende Beabstandung der Drehachse der Walze von der Prallplatte vorzusehen, sodass zwischen der Oberfläche der Walze und der Oberfläche der Prallplatte der Sortierspalt ausgebildet wird. Diese Ausführungsform zeichnet sich insbesondere durch ihre einfache konstruktive Realisierung aus. Denn einerseits wird für den Sortierspalt oder für jeweils einen Sortierspalt jeweils nur eine Walze benötigt. Demnach ist auch der Antrieb konstruktiv leichter zu realisieren, da der Antrieb nur eine Walze oder jeweils nur eine Walze antreiben muss. Die Verwendung einer Prallplatte der Flugbahnseparatoreinrichtung als Teil oder als einseitige Begrenzung des Sortierspalts oder eines Sortierspalts hat darüber den Vorteil, dass die Prallplatte, die bevorzugt aus rostfreiem Stahl (VA-Stahl) gebildet ist, eine sehr hohe Widerstandsfähigkeit oder Verschleißresistenz aufweist, sodass auch den NE-Metallgegenständen der NE-Metallfraktion anhaftende Schlackerückstände, insbesondere der in der Schlacke enthaltene freie Kalk, nicht oder nur in geringem Maße zur Beschädigung oder zum Verschleiß der Prallplatte und damit des Sortierspalts beitragen kann. Insbesondere ist die Anhaftung von Schlackebestandteilen an der Prallplatte sehr gering, sodass insbesondere nicht die Gefahr besteht, dass Ablagerungen die Höhe oder die Breite des Sortierspalts kontinuierlich verringern und damit die Effektivität des Aussortierens, insbesondere die Effektivität des Aussortierens von Münzen aus den NE-Metallgegenständen reduzieren oder zu Nichte machen.

Im Zusammenhang mit dieser Ausführungsform kann zudem besonders vorteilhaft vorgesehen sein, dass ein oberhalb der Prallplatte im Haubeninnenraum der Abwurfhaube angeordneter Prallvorhang näher an der Eintrittsfläche angeordnet ist, als die Drehachse der zumindest einen Walze. Durch eine derartige Anordnung des Prallvorhangs, insbesondere oberhalb der Prallplatte wird sichergestellt, dass die vollständige NE-Metallfraktion in den Bereich der Walze und damit in den Bereich des Sortierspalts gelangt. Außerdem kann vorteilhaft vorgesehen sein, dass die Walze, insbesondere die Drehachse der Walze zusammen mit der Prallplatte bewegt, insbesondere verschoben werden kann, sodass unabhängig von der Positionierung und Ausrichtung der Prallplatte ein konstanter Sortierspalt zwischen der Prallplatte und der Oberfläche der Walze ausgebildet wird.

Gemäß einer weiteren besonders vorteilhaften Ausgestaltung der Sortiervorrichtung kann vorgesehen sein, dass die zumindest eine Walze eine beidseitige Lagerung über beidseitig angeordnete Lagermittel aufweist, wobei die Lagermittel bevorzugt so angeordnet sind, dass die Drehachse der zumindest einen Walze oberhalb einer Unterkante der Abwurfhaube verläuft. Durch die beidseitige Lagerung der zumindest einen Walze über entsprechende Lagermittel, wird einerseits eine hohe mechanische Stabilität und damit eine besonders wünschenswerte konstante Ausbildung der Höhe oder der Breite des Sortierspalts gewährleistet. Die Anordnung der Lagermittel einer beidseitigen Lagerung der zumindest einen Walze zur Anordnung der Drehachsen oberhalb einer Unterkante der Abwurfhaube ist zudem sinnvoll, um einerseits eine kompakte Bauform der Sortiervorrichtung zu erreichen und um andererseits insbesondere unterhalb der Sortiervorrichtung einen ausreichenden Platz bereitzustellen, um sowohl die durch den Sortierspalt tretenden NE-Metallgegenstände als auch die nicht durch den Sortierspalt hindurchtretenden NE-Metallgegenstände zu sammeln und zu bevorraten.

Wie bereits angedeutet, kann es für die Sortiervorrichtung insgesamt vorteilhaft sein, wenn die Abwurfhaube Bewegungsmittel zur Positionsveränderung von zumindest einer Prallplatte der Flugbahnseparatoreinrichtung aufweist. In erster Linie wird durch die Bewegungsmittel erreicht, dass die Prallplatte in ihrer Position und Ausrichtung optimal auf die in die Eintrittsfläche der Abwurfhaube eintretende Materialschüttung eingestellt wird, um eine möglichst saubere Trennung oder Aussortierung der NE-Metallfraktion zu ermöglichen. Dazu können die Bewegungsmittel beispielsweise derart ausgebildet sein, dass sie eine Verschiebung oder Translation der Prallplatte sowie eine Rotation der Prallplatte um eine Rotationsachse ermöglichen. Ggf. kann auch vorgesehen sein, dass eine Prallplatte über zwei mit einem Gelenk miteinander verbundenen Plattenelemente verfügt und die Bewegungsmittel auch eine Veränderung der Relativanordnung der zwei Plattenelemente zueinander erlauben. Neben der Prallplatte kann beispielsweise auch der zumindest eine Prallvorhang der Flugbahnseparatoreinrichtung mit Bewegungsmitteln zur Positionsänderung des Prallvorhangs ausgestattet sein. Auch dadurch wird eine optimierte Separierung, insbesondere eine verbesserte Abseparierung der NE-Metallfraktion aus der Materialschüttung erreicht.

Ebenfalls kann, wie oben angedeutet, vorteilhaft vorgesehen sein, dass die Lagermittel der zumindest einen Walze mit zumindest einer Prallplatte der Flugbahnseparatoreinrichtung lösbar verbunden sind, wobei die Abwurfhaube Bewegungsmittel zur Positionsveränderung der Lagermittel aufweist und in einem verbundenen Zustand der Lagermittel zusammen mit zumindest der Prallplatte im Haubeninnenraum der Abwurfhaube bewegbar, insbesondere verschiebbar sind. Die lösbare Verbindung zwischen den Lagermitteln der zumindest einen Walze mit der Prallplatte der Flugbahnseparatoreinrichtung führt einerseits dazu, dass in einem verbunden Zustand eine optimale Ausbildung oder Ausrichtung des Sortierspalts zusammen mit oder bezogen auf die Prallplatte erreicht wird und in einem nicht verbundenen Zustand eine unabhängige Bewegung und Handhabung von der zumindest einen Walze und der Flugbahnseparatoreinrichtung, insbesondere der Prallplatte ermöglicht wird, sodass beispielsweise Wartungs- und/oder Reinigungstätigkeiten durchgeführt werden können. Durch die Realisierung von Bewegungsmitteln zur Positionsänderung der Lagermittel der zumindest einen Walze wird ebenfalls erreicht, dass die Ausrichtung der zumindest einen Walze und damit die Positionierung des Sortierspalts optimal an die jeweilige Position und Ausrichtung der Prallplatte angepasst werden kann. Dabei wird in besonders vorteilhafter Weise in einem verbundenen Zustand zwischen den Lagermitteln der Walze und der Prallplatte ermöglicht, dass eine optimale Relativposition erreicht und beibehalten wird, insbesondere auch wenn die Position und/oder Ausrichtung der Prallplatte verändert wird. Dadurch kann beispielsweise eine optimale Relativanordnung zwischen der Prallplatte und dem Sortierspalt oder eine optimale Ausbildung des Sortierspalts gewährleistet werden.

Eine weitere bevorzugte Ausführungsform sieht vor, dass eine Münzaustragsvorrichtung von der Sortiervorrichtung umfasst ist, die unterhalb des zumindest einen Sortierspalts angeordnet ist, wobei die Münzaustragsvorrichtung bevorzugt so ausgestaltet ist, dass die durch den zumindest einen Sortierspalt hindurch tretenden NE-Metallgegenstände, insbesondere Münzen, in einer Münzaustragsrichtung zu einer Seite der Sortiervorrichtung ausgetragen werden, insbesondere entgegengesetzt zu einer NE-Metallaustragsrichtung, in der die nicht durch den zumindest einen Sortierspalt hindurch tretenden NE-Metallgegenstände aus der Sortiervorrichtung ausgetragen werden.

Ebenfalls kann für die vorgeschlagene Sortiervorrichtung vorteilhaft vorgesehen sein, dass sich die Drehachse der zumindest einen Walze senkrecht zu einer Eintrittsfläche der Abwurfhaube, insbesondere waagerecht, erstreckt. In diesem Zusammenhang sei an dieser Stelle erwähnt, dass bei einer Realisierung der Sortiervorrichtung mit mehr als einer Walze, bevorzugt alle Drehachsen der jeweiligen Walzenachsen untereinander parallel oder jeweils parallel zueinander ausgebildet sind. Die bevorzugte Ausrichtung der Drehachse oder der Drehachsen senkrecht zu der Eintrittsfläche der Abwurfhaube bietet den Vorteil, dass es ermöglicht wird, die nicht durch den Sortierspalt gelangenden Bestandteile der NE-Metallfraktion in einer Austrittsrichtung oder in einer Austragsrichtung aus der Sortiervorrichtung zu führen, die senkrecht zur Eintrittsfläche der Abwurfhaube steht, damit aber im Wesentlichen parallel zur Eintrittsrichtung der Materialschüttung in die Sortiervorrichtung verläuft. Dadurch können eine besonders saubere Trennung und eine besonders effektive Sortierung der NE-Metallfraktion erreicht werden.

Ebenfalls kann vorteilhaft vorgesehen sein, dass der zumindest eine Sortierspalt von zumindest zwei Walzen begrenzt wird, wobei der Antrieb der Walzen derart ausgebildet ist, dass zumindest zwei Walzen eine gegenläufige Rotation ausführen. Durch die Begrenzung oder Ausbildung des Sortierspalts durch zwei benachbarte Walzen mit bevorzugt zueinander parallelen Drehachsen wird einerseits der Austrag der nicht durch den Sortierspalt hindurchgelangenden NE-Metallgegenstände verbessert, da in diesem Fall jeweils zwei Walzen die NE-Metallgegenstände mit einer Kraft beaufschlagen können, die vom Sortierspalt wegführt. Außerdem wird, insbesondere wenn die vorteilhafte gegenläufige Rotation mittels des entsprechenden Antriebs der Walzen realisiert ist, ermöglicht, dass ein Festsetzen von Gegenständen im Sortierspalt und damit eine Blockade der Walzen oder der einen Walze verhindert wird. Dies betrifft insbesondere NE-Metallgegenstände mit einer keilförmigen Kontur, die sonst dazu führen könnten, dass sie im Bereich des Sortierspalts eine Klemmwirkung ausüben, die ggf. durch die jeweilige Rotation der Achse der Walze noch unterstützt und damit die Klemmwirkung, ggf. bis zum Stillstand der einen Walze oder sogar bis zum Stillstand beider Walzen vergrößert.

Dementsprechend ist in diesem Zusammenhang besonders vorteilhaft, wenn die gegenläufige Rotation der Drehachsen der zumindest zwei einen Sortierspalt ausbildenden oder begrenzenden Walzen derart ausgebildet ist, dass die Walzenoberflächen im Bereich des Sortierspalts beide, zumindest tangential, zumindest teilweise entgegen der Richtung des Gewichtskraftvektors rotieren. Dies bedeutet mit anderen Worten ausgedrückt, dass die gegenläufige Rotation der einen Sortierspalt ausbildenden oder begrenzenden Walzen so ausgeführt ist, dass die Walzenoberflächen und deren Bewegung im Bereich der Verengung und im Bereich des Sortierspalts die in diesen Bereich eintretenden Gegenstände, insbesondere NE-Metallgegenstände auch gegen die Gewichtskraft mit Kraft beaufschlagen, soweit eine Anlage zwischen der Walzenoberfläche und den NE-Metallgegenständen erfolgt. Dadurch wird, wie oben beschrieben, die nachteilhafte Klemmwirkung effektiv unterbunden. Eine weitere Kraftbeaufschlagung kann beispielsweise durch eine Profilierung der Oberfläche der zumindest einen Walze realisiert werden, sodass auch eine Kraft parallel zur Drehachse auf die NE-Metallgegenstände ausgeübt wird.

Es kann alternativ vorgesehen sein, dass die Walzen derart angetrieben sind, dass eine einheitliche Drehrichtung oder Rotation aller Walzen realisiert wird. Dies kann mit einem gemeinsamen Antrieb realisiert werden. In diesem Fall können auch Langteile aus der NE-Metallfraktion aussortiert werden.

Bevorzugt kann zudem vorgesehen sein, dass die Walzen als Bürstenwalzen ausgebildet sind, wobei weiter bevorzugt die Bürstenwalzen Borsten mit unterschiedlicher Länge aufweisen. Besonders bevorzugt sind Bürstenwalzen mit Borsten mit zwei oder mehr unterschiedlichen Längen. Diese können bevorzugt so angeordnet sein, dass die Borsten mit gleicher Länge zu Gruppen oder Bündeln zusammengefasst sind. Die Gruppen oder Bündel können weiter so angeordnet sein, dass die eine Borstenart mit einer Länge, bevorzugt mit einer größten Länge eine Spirale auf der Walze oder auf der Walzenoberfläche ausbildet.

Weiter bevorzugt kann auch vorgesehen sein, dass die Bürstenwalzen eine Welle und einen von der Welle lösbaren und auf der Welle verdrehsicher befestigbaren Borstenträger aufweist. Besonders bevorzugt kann auch eine Mehrzahl oder eine Vielzahl von Borstenträgerelementen vorgesehen sein, die dann zu einem Borstenträger kombiniert werden. Dazu kann vorgesehen sein, dass die Borstenträgerelemente an den axialen Enden Verbindungsmittel aufweisen, beispielsweise eine Zackung, um die Borstenträgerelemente kraftschlüssig miteinander und/oder mit einer Walzenwelle zu verbinden.

Die Verwendung von Bürstenwalzen hat eine vorteilhafte Wirkung bei der Aussortierung der Münzen. Auch kann mit Bürstenwalzen, gerade bei gleichsinniger Rotation der Walzen eine Aussortierung von Kupfergewölle erreicht werden. Die Bürstenwalzen mit unterschiedlichen Borstenlängen haben sich als vorteilhaft für die Sortierung von Münzen und für die zusätzliche Aussortierung von Langteilen erwiesen, insbesondere bei gleichsinniger Rotatoin aller Walzen. Dabei werden die Langteile im Wesentlichen quer zu den Drehachsen der Walzen ausgetragen und können in einem entsprechenden seitlich angeordneten Behälter aufgefangen werden. Durch die Ausbildung eines Borstenträgers oder von Borstenträgerelementen, die zu einem Borstenträger zusammengefügt werden können, wird realisiert, dass bei Beschädigung oder Verschleiß nicht die gesamte Bürstenwalze sondern nur ein Teil ersetzt oder erneuert werden muss.

Um ein möglichst hochwertiges Münzenkonzentrat oder Münzkonzentrat zu erzeugen, welches aus den Metallgegenständen besteht, welche die Sortierspalte oder den zumindest einen Sortierspalt passieren, ist es besonders wichtig die Breite des Sortierspalts möglichst optimal zu gestalten. Dabei wird bevorzugt der Sortierspalt oder die Sortierspalten im Wesentlichen durch die kürzeren oder kürzesten Borsten benachbarter Bürstenwalzen gebildet. Gemäß einer vorteilhaften Ausgestaltungsform der Vorrichtung ist dementsprechend vorgesehen, dass die benachbarten Bürstenwalzen so zueinander angeordnet sind, dass zwischen den kürzesten Borsten benachbarter Walzen ein Abstand von 2-7mm, bevorzugt von 3-6mm ausgebildet ist. Dadurch kann ein Münzkonzentrat erzeugt werden, welches einen hohen Anteil an Münzen und nur einen vergleichsweise geringen Anteil an sonstigen Flachteilen aufweist.

Weiterhin hat es sich als vorteilhaft herausgestellt, wenn auch Teile des Sortierspalts oder der Sortierspalten, also der Bereich zwischen den jeweils gegenüberliegenden kürzesten Borsten der Bürstenwalzen mit den längeren Borsten durchkämmt wird. Hier hat es sich jedoch als besonders vorteilhaft herausgestellt, wenn die längeren oder längsten Borsten jeweils einer Walze und die kürzesten Borsten einer jeweils benachbarten Walze nicht aufeinander treffen oder sogar ineinander kämmen. Vielmehr ist gemäß einer besonders vorteilhaften Ausführungsform der Erfindung vorgesehen, dass benachbarte Bürstenwalzen so zueinander angeordnet sind, dass zwischen den längsten Borsten einer Walze und den kürzesten Borsten einer benachbarten Walze immer mindestens ein Abstand von 0,5mm bis 1,5mm, bevorzugt von 0,8mm bis 1,2mm, ausgebildet ist. Dieser Abstand bezieht sich auf die Situation, dass die jeweiligen kürzesten und längsten Borsten einander zugewandt im Wesentlichen parallel zueinander ausgerichtet sind, also in der Situation in etwa auf Höhe der Drehachse der jeweiligen Walzen bei einander zugewandten kürzesten und längsten Borsten.

Dieser Abstand oder diese Definition des Abstands trifft auch auf die oben bereits genannte Bemessung des Abstands zwischen kürzesten Borsten jeweils benachbarter Bürstenwalzen zu.

In einer weiteren Ausgestaltung kann vorgesehen sein, dass benachbarte Bürstenwalzen so zueinander angeordnet sind, dass zwischen den längsten Borsten benachbarter Walzen in Richtung der Drehachsen ein, bevorzugt konstanter, Abstand von weniger als 45mm, bevorzugt weniger als 42mm, besonders bevorzugt weniger als 40mm, ausgebildet ist. Hierbei soll konstant als zeitlich konstant verstanden werden. Der Abstand der längsten Borsten soll sich also nicht während der Rotation ändern. Gerade bei der Ausbildung von Spiralabschnitten oder Spiralen durch die längsten Borsten lässt sich dieser Maximalabstand der der längsten Borsten in Längsrichtung oder in Richtung der Drehachsen gut einstellen.

Der Abstand kann dabei alternierend ausgebildet sein, so dass auf einen größeren Abstand ein kleinerer Abstand folgt, wobei keiner der Abstände den Maximalabstand überschreitet. Der Unterschied der aufeinanderfolgenden Abstände in Längsrichtung kann einen Einfluss auf die Austragsgeschwindigkeit in Längsrichtung ausüben und je nach Anwendungsfall vorteilhaft eingestellt werden. Die Einhaltung des Maximalabstands ermöglicht in besonders vorteilhafter Weise eine weitere "Sortierdimension" zu etablieren. Denn damit können den Sortierspalt nur Flachteile passieren, die in einer Dimension an keiner Stelle breiter oder stärker sind als der Sortierspalt breit ist und in einer zweiten im wesentlichen senkrechten Dimension nicht länger oder größer sind als 45mm, bevorzugt 42mm, besonders bevorzugt 40mm. Dies führt aber auch dazu, dass die die Sortierspalt durchquerenden Gegenstände allesamt sehr ähnliche Abmessungen aufweisen, wie die auszusortierenden Münzen. Folglich wird durch die vorteilhafte Relativanordnung der längsten Borsten benachbarter Walzen in Längsrichtung oder in Richtung der Drehachsen eine weitere Qualitätssteigerung bei dem aussortierten Münzkonzentrat erreicht.

Einerseits kann vorgesehen sein, dass die Bürstenwalzen auf einer Haltevorrichtung, beispielsweise auf einer Rahmenvorrichtung, fest angeordnet sind. In diesem Fall sind die entsprechenden Abstände der Drehachsen sowie die entsprechenden Abstände der Walzenwellen fest oder festgelegt und können an sich nicht verändert werden. In diesem Fall kann eine Anpassung der genannten Abstände, also des Abstands zwischen kürzesten Borsten und der Abstand zwischen kürzesten Borsten einerseits und längsten Borsten andererseits, dadurch angepasst oder variiert werden, dass unterschiedliche Borstenträger oder Borstenträgerelemente mit entsprechend angepassten Borsten, insbesondere mit entsprechend in der Länge angepassten Borsten auf die Walzen, insbesondere die Walzenwellen aufgebracht werden. In einer alternativen Ausführungsform kann jedoch auch vorgesehen sein, dass die Walzen oder Bürstenwalzen als solche in ihrer Position auf einem Unterbau, beispielsweise auf einem Rahmen, verändert und in der jeweils veränderten Position festlegbar sind, sodass die Abstände auch ohne einen Wechsel des Borstenträgers oder der Borstenträgerelemente durch eine Positionsänderung der Bürstenwalzen insgesamt verändert werden kann.

Für die Erzeugung eines besonders hochwertigen oder reinen Münzkonzentrats hat es sich als vorteilhaft herausgestellt, wenn die Bürstenwalzen, insbesondere die Borsten der Bürstenwalzen, die am häufigsten auf einer Bürstenwalze vorkommen einen Außendurchmesser der Bürstenwalze definieren, der auf das Spektrum der Durchmesser der auszusortierenden Münzen angepasst ist. Denn in einem bestimmten Bereich sorgt die Außenkontur oder der wesentliche Anteil der Oberfläche der Bürstenwalzen eine Krümmung aufweisen, die ein Aufrichten oder Aufstellen der auszusortierenden Münzen durch die Rotation der Walzen begünstigen. Dementsprechend ist gemäß einer vorteilhaften Ausführungsform vorgesehen, dass die Walzen einen Außendurchmesser, bevorzugt durch die kürzesten Borsten definiert, aufweisen, der derart gewählt ist, dass auf die Walzen aufgetragene Münzen durch die Rotation der Walzen in Richtung des Sortierspalts bewegt und dabei aufgerichtet werden. Bevorzugt können die Außendurchmesser der Bürstenwalzen 10cm - 30cm, bevorzugt 15cm - 28cm betragen.

Außerdem kann es ebenfalls vorteilhaft sein, wenn die Bürstenwalzen an einem Rahmen befestigt oder von einem Rahmen aufgenommen werden, welcher bevorzugt eine U-Form ausbildet und damit einseitig offen ist. Einerseits bietet ein entsprechender Rahmen die notwendige Grundstabilität für die Anordnung und Befestigung der Bürstenwalzen. Darüber hinaus ermöglicht ein einseitig offener Rahmen, der beispielsweise durch drei aneinandergrenzende Schenkel in U-Form gebildet wird, dass auch der Rahmen der Bürstenwalzen an dem der Lagerung gegenüberliegenden Seite der Bürstenwalze offen ist und auch damit das Verklemmen, das Aufstauen oder das Verkanten von ausgetragenen Metallgegenständen der Metallschüttung verhindert wird.

Löffel sind ein typisches Beispiel für Metall-Gegenstände, die mit dem Löffelstiel in den Bereich zwischen den Bürstenwalzen, also in den Bereich des Sortierspalts eindringen können und am Austragsende der Bürstenwalzen zu Verklemmungen und Aufstauungen führen könnten, was jedoch durch die offene Anordnung der Walzenenden und/oder des Rahmens verhindert werden kann.

Eine ebenfalls besonders vorteilhafte Ausführungsform der Sortiervorrichtung sieht vor, dass vier, bevorzugt sechs, besonders bevorzugt acht Walzen von der Sortiervorrichtung umfasst sind und die Lagermittel der Walzen derart ausgebildet sind, dass eine parallele, v-förmige oder u-förmige Anordnung der Walzen und/oder der Drehachsen der Walzen, erreicht wird. Dabei kann besonders vorteilhaft vorgesehen sein, dass zwischen den vier oder sechs oder acht Walzen drei oder fünf oder sieben Sortierspalten ausgebildet sind, die jeweils von zwei benachbarten Walzen begrenzt oder gebildet werden. Dabei kann vorteilhaft vorgesehen sein, dass zwei benachbarte, insbesondere mittlere Walzen eine gegenläufige Rotation ausführen, die an den Walzen zur Anlage kommenden NE-Metallgegenstände durch beide Walzen auch vom Sortierspalt weg entgegen der Gewichtskraft oder entgegen des Gewichtskraftvektors Kraft beaufschlagen. Zudem kann vorgesehen sein, dass die vier oder sechs oder acht Walzen zwei Gruppen von Walzen, beispielsweise eine linke und eine rechte Walzengruppe ausbilden, wobei die jeweiligen Walzen einer Walzengruppe eine identische Rotationsrichtung der Drehachsen ausführen und entsprechende Antriebsmittel dafür umfassen.

Durch die v-förmige oder u-förmige Anordnung der Walzen über die entsprechende Ausgestaltung und Anordnung der Lagermittel an oder in der Abwurfhaube, kann in besonders vorteilhafter Weise eine Verbesserung des Sortiervorgangs, insbesondere zusammen mit einer Verbesserung des Austrags der nicht durch die Sortierspalten hindurchtretenden Gegenstände erreicht werden. Bevorzugt kann vorgesehen sein, dass die vier, bevorzugt sechs, besonders bevorzugt acht Walzen insgesamt gemeinsame Lagermittel, beispielsweise gemeinsame beidseitige Lagerschienen oder Lagerträger aufweisen, die an oder in der Abwurfhaube der Sortiervorrichtung angeordnet und befestigt sind. Durch die parallele Ausrichtung der Walzen, insbesondere durch die parallele Ausrichtung der Drehachsen der Walzen wird weiter in vorteilhafter Weise erreicht, dass die jeweiligen Sortierspalten eine konstante Breite oder Höhe aufweisen. Dies betrifft jedoch lediglich die konstante Höhe oder die konstante Breite von genau einem, durch jeweils zwei Walzen gebildeten oder begrenzten Sortierspalt. Die Abstände der Walzen zueinander oder die Abstände der Drehachsen der Walzen zueinander können jedoch auch variiert werden, sodass zwischen den Walzen Sortierspalten mit an sich konstanten, gegenüber anderen Sortierspalten aber unterschiedlichen Breiten oder Höhen realisiert werden. Auch dadurch kann die Sortierfunktion der Sortiervorrichtung weiter verbessert werden.

Im Fall der Verwendung von Bürstenwalzen kann es besonders vorteilhaft sein, wenn die Achsen oder Drehachsen aller Bürstenwalzen in einer gemeinsamen Ebene angeordnet sind. Die Ebene kann dabei sowohl waagerecht als auch entlang der Drehachsen geneigt ausgebildet sein. Eine Neigung beeinflusst den Vorschub der Gegenstände auf oder zwischen den Walzen. Es kann eine Neigung von bis zu 20° gegenüber der Waagerechten vorgesehen werden.

Gemäß einer weiteren besonders bevorzugten Ausgestaltung kann vorgesehen sein, dass ein gemeinsamer Antrieb für zumindest zwei, bevorzugt vier, besonders bevorzugt sechs oder acht Walzen vorgesehen ist, wobei mittels eines mit dem Antrieb verbundenen Getriebs die gegenläufige Rotation von zumindest zwei Walzen erreicht werden kann. Der gemeinsame Antrieb von mehreren Walzen, insbesondere der gemeinsame Antrieb von allen Walzen ermöglicht eine konstruktiv einfache Realisierung der Sortiervorrichtung unter Verwendung von an sich bekannter Antriebs- und/oder Übertragungstechnologie. Bevorzugt kann, wie oben bereits beschrieben, vorgesehen sein, dass die gegenläufige Rotation von zwei Walzen, insbesondere von zwei mittleren Walzen, so ausgeführt ist, dass im Bereich des Walzenspalts mit den Walzen zur Anlage kommende Gegenstände zumindest teilweise entgegen der Gewichtskraft der Gegenstände kraftbeaufschlagt werden, um ein Verklemmen oder Verkeilen von Gegenständen im Bereich des Sortierspalts oder im Sortierspalt zu verhindern. Die gruppenweise gleichgerichtete Rotation von Walzen kann, insbesondere für die Realisierung einer v-förmigen oder u-förmigen Anordnung der Walzen dafür sorgen, dass eine gleichmäßige Materialverteilung der NE-Metallgegenstände über alle Walzen und über alle Sortierspalten erreicht wird. Dazu kann beispielsweise vorgesehen sein, dass eine rechte Walzengruppe im Uhrzeigersinn rotiert, wohingegen eine linke Walzengruppe gegen den Uhrzeigersinn rotiert. Um diese Rotation zu erreichen, kann ebenfalls bevorzugt der gemeinsame Antrieb zum Einsatz kommen. Denn dann kann vorteilhaft vorgesehen sein, dass der Antrieb beispielsweise zwei gegenläufige Antriebe umfasst, die jeweils die mittleren, insbesondere v-förmig oder u-förmig angeordneten Walzen gegenläufig antreiben und die verbleibenden zwei oder vier Walzen ausgehend von den mittleren Walzen, beispielsweise über eine Ketten-Steuerung, einen Zahnriemenantrieb oder dergleichen mittelbar über den Antrieb der ersten oder mittleren Walze erfolgt, sodass für die Walzen auf einer rechten oder linken Seite bzw. auf einem rechten oder linken Schenkel einer u-Form oder einer v-Form eine gleichsinnige Rotation ermöglicht wird.

Gemäß einer weiteren, besonders bevorzugten Ausgestaltung der Sortiervorrichtung kann vorgesehen sein, dass der Antrieb der zumindest einen Walze auf einer der Eintrittsfläche der Abwurfhaube zugewandten Seite der zumindest einen Walze, insbesondere innerhalb des Haubeninnenraums, angeordnet ist. Dadurch wird in besonders vorteilhafter Weise einerseits eine kompakte Bauform der Sortiervorrichtung erreicht. Andererseits wird dadurch, insbesondere beim Anordnen des Antriebs innerhalb des Haubeninnenraums, der Antrieb vor möglichen negativen externen Einflüssen oder Beschädigungen geschützt. Bevorzugt kann vorgesehen sein, dass bei einer Anordnung des Antriebs im Haubeninnenraum der Abwurfhaube die Flugbahnseparatoreinrichtung Mittel umfasst, die den Antrieb oder die Antriebseinheit gegenüber der Flugbahn von in die Abwurfhaube eintretenden Gegenständen, insbesondere gegenüber Schlacketeilen abschirmt. Dazu kann beispielsweise auf einer der Eintrittsfläche der Abwurfhaube zugewandten Seite ein weiterer Prallvorhang oder eine Prallplatte vorgesehen sein, die den Antrieb oder die Antriebseinheit abschirmt oder schützt. Weiter kann vorgesehen sein, dass der Antrieb an einem Lagermittel zur Lagerung der Walzen angeordnet und/oder befestigt ist.

Ebenfalls kann vorteilhaft vorgesehen sein, dass oberhalb der zumindest einen Walze, insbesondere oberhalb der Walzen, Verengungsmittel, bevorzugt senkrecht zur Eintrittsfläche der Abwurfhaube, angeordnet sind, sodass von der Flugbahnseparatoreinrichtung kommende NE-Gegenstände in Richtung einer Mittellängsachse der Abwurfhaube gelenkt werden. Als Verengungsmittel können beispielsweise Kantbleche oder Profilbleche, beispielsweise aus rostfreiem Stahl, zum Einsatz kommen. Die Verengungsmittel sorgen bevorzugt dafür, dass alle in die Eintrittsfläche gelangenden NE-Metallgegenstände in den Bereich der Walzen und damit in den Bereich des zumindest einen Sortierspalts gelenkt werden. Damit kann erreicht werden, dass auch bei einer entsprechend großen Eintrittsfläche alle eintretenden NE-Metallgegenstände in den Bereich der Sortierspalten oder in den Bereich des Sortierspalts geführt werden und damit einer Sortierung, insbesondere einer Aussortierung von Münzen, unterzogen werden.

Besonders bevorzugt kann dabei vorgesehen sein, dass die Verengungsmittel walzenseitig zumindest über einer Drehachse einer jeweils äußeren Walze enden. Dadurch wird einerseits sichergestellt, dass die NE-Metallgegenstände zuverlässig dem Sortierspalt oder den Sortierspalten zugeführt werden. Andererseits kann erreicht werden, dass ein Verklemmen von NE-Metallgegenständen zwischen einer jeweils äußeren Walze und einem sonstigen Begrenzungsteil, beispielsweise einem Wandteil der Abwurfhaube, nicht zur Verklemmung oder Blockade der Walzen führen.

Ebenfalls kann vorteilhaft vorgesehen sein, dass unterhalb der Walzen der Sortiervorrichtung Verengungsmittel angeordnet sind, mit welchen die den Sortierspalt oder die Sortierspalten passierenden NE-Gegenstände, insbesondere Münzen, auf einen gemeinsamen Auswurfspalt gelenkt werden. Die unterhalb der Walzen angeordneten Verengungsmittel schützen in besonderer Weise die den Sortierspalt oder die Sortierspalten passierenden NE-Gegenstände, insbesondere Münzen, vor unbefugtem Zugriff. Denn die NE-Gegenstände, insbesondere Münzen, die den Sortierspalt oder die Sortierspalten passieren haben einen Wert, insbesondere Münzwert, der deutlich über dem Materialwert der Münzen liegt. Dementsprechend ist das durch den Sortierspalt oder die Sortierspalten erzeugte Münzkonzentrat von erheblichem Wert. Dies führt jedoch auch zu dem Bedürfnis, das Münzkonzentrat vor unbefugtem Zugriff zu schützen. Um dies zu ermöglichen, kann vorgesehen sein, dass unterhalb der Sortiervorrichtung oder austrittsseitig zu der Sortiervorrichtung ein Aufnahmebehältnis oder Bevorratungsbehälter für das Münzkonzentrat vorgesehen ist, der lediglich einen schmalen Eintrittsspalt oder eine schmale Zutrittsöffnung aufweist. Um jedoch eine optimale Zuführung zu ermöglichen und auch zwischen der Sortiervorrichtung und der Aufnahme oder dem Bevorratungsbehälter einen Zugriff auf das Münzkonzentrat möglichst zu vermeiden oder zu erschweren, können die vorteilhaft vorgesehenen Verengungsmittel unterhalb der Walzen angeordnet sein und die den Sortierspalt oder die Sortierspalten passierenden NE-Gegenstände, insbesondere Münzen auf einen gemeinsamen Auswurfspalt lenken.

Besonders bevorzugt kann vorgesehen sein, dass die unterhalb der Walzen angeordneten Verengungsmittel derart ausgebildet sind, dass die Gewichtskraft der den Sortierspalt oder der die Sortierspalten passierenden NE-Gegenstände, insbesondere Münzen, einen Austritt aus dem Auswurfsspalt ermöglichen. Dies ermöglicht in besonders vorteilhafter Weise, dass keine Fördermittel oder Fördereinrichtung vorgesehen werden muss, um das Münzkonzentrat oder die aussortierten NE-Gegenstände einer Auffangeinrichtung oder einem Bevorratungsbehälter zuzuführen. Dies bedeutet mit anderen Worten ausgedrückt, dass auch beim Vorsehen entsprechender Verengungsmittel ein selbstständiger oder automatischer, lediglich durch die Gewichtskraft bewirkter oder unterstützter Austragsvorgang der von dem Sortierspalt oder den Sortierspalten aussortierten Gegenständen, insbesondere Münzen, aus der Sortiervorrichtung erfolgen kann.

Besonders bevorzugt kann zudem vorgesehen sein, dass die Sortiervorrichtung zwei nebeneinander angeordnete identische Walzenbaugruppen umfasst, wobei jede Walzenbaugruppe zumindest zwei, bevorzugt vier, besonders bevorzugt sechs oder acht Walzen mit entsprechenden Lagermitteln umfasst und insbesondere jede Walzenbaugruppe einen eigenen unabhängigen Antrieb umfasst, der bevorzugt zwei Walzen der jeweiligen Walzenbaugruppe direkt antreibt. Besonders bevorzugt können die Lagermittel der Walzenbaugruppe u-förmig oder v-förmig ausgestaltet sein.

Die vorliegende Erfindung führt auch zu einer Wirbelstromabscheidevorrichtung umfassend eine Zuführeinrichtung, insbesondere ein Förderband, welches zur Beförderung einer Materialschüttung eingerichtet ist, wobei die Wirbelstromabscheidevorrichtung, insbesondere die Zuführeinrichtung, eine Wirbelstromeinrichtung umfasst, welche endseitig an der Zuführeinrichtung angeordnet ist und die die Flugbahn von NE-Gegenständen der Materialschüttung nach Verlassen der Zuführeinrichtung selektiv beeinflusst, wobei die Wirbelstromabscheidevorrichtung Befestigungsmittel zur Befestigung einer der Zuführeinrichtung, in Zuführrichtung, nachgeordneten Abwurfhaube aufweist und erfindungsgemäß dadurch gekennzeichnet ist, dass sie eine, wie oben beschriebene Sortiervorrichtung umfasst.

Durch die erfindungsgemäße Wirbelstromabscheidevorrichtung werden gleichzeitig mehrere, besonders vorteilhafte Wirkungen realisiert. Einerseits kann durch die oben bereits beschriebene Ausgestaltung und Wirkung der Sortiervorrichtung mit einer einzigen Zuführeinrichtung, nämlich der Zuführeinrichtung der Wirbelstromabscheidevorrichtung eine Herstellung oder Generierung eines Münzkonzentrats aus einer Materialschüttung erreicht werden. Dadurch wird erfindungsgemäß eine mehrstufige aneinander anschließende Sortierung erreicht, die zumindest auch zur Erzeugung eines Münzkonzentrats führt. Damit wird, wie oben beschrieben, der Verschleiß und damit der Instandhaltungs- und Wartungsaufwand erheblich reduziert. Auch der Personalaufwand sowie der Bedarf an Lagermitteln und Lagerflächen oder Lagervolumen wird erheblich reduziert. Ein weiterer besonderer Vorteil besteht darin, dass grundsätzlich jede bekannte Wirbelstromabscheidevorrichtung leicht mit einer oben beschriebenen Sortiervorrichtung nachgerüstet oder ausgerüstet werden kann, indem im Wesentlichen lediglich die Abwurfhaube der oben beschriebenen Sortiervorrichtung eine bestehende Abwurfhaube ersetzt oder zum Einsatz kommt.

Gemäß einer besonders vorteilhaften Ausgestaltung der Wirbelstromabscheidevorrichtung kann vorgesehen sein, dass diese ein Gestell zur Beabstandung der Wirbelstromabscheidevorrichtung von einem Untergrund aufweist, wobei das Gestell derart ausgebildet ist, dass zwischen einem Auslass des zumindest einen Sortierspalts, insbesondere zwischen einem unterhalb der Walzen angeordneten Verengungsmittel, und dem Untergrund, ein Abstand von mindestens 40cm, bevorzugt mindestens 60cm, besonders bevorzugt mindestens 80cm besteht oder erreicht wird. Dies ermöglicht in besonders vorteilhafter Weise, dass ohne ein Vorsehen von weiteren Transport- oder Fördereinrichtungen und lediglich unter Ausnutzung der Gewichtskraft die den Sortierspalt oder die Sortierspalten passierenden NE-Gegenstände, insbesondere Münzen, in einen unterhalb der Wirbelstromabscheidevorrichtung, insbesondere unterhalb der Sortiervorrichtung angeordneten Auffang- und/oder Bevorratungsbehälter geführt werden oder fallen. Damit kann das Münzkonzentrat in besonders vorteilhafter Weise gesammelt und sicher bevorratet werden, ohne dass dazu zusätzlicher konstruktiver Aufwand betrieben werden muss, der über das Bereitstellen eines entsprechenden Behälters hinausgeht.

Gemäß einer weiteren, besonders bevorzugten Ausgestaltung der Wirbelstromabscheidevorrichtung kann vorgesehen sein, dass der zumindest eine Sortierspalt eine Durchtrittsebene aufweist, in der NE-Gegenstände, insbesondere Münzen, den Sortierspalt passieren können, wobei die Durchtrittsebene wenigstens eine Senkrechtkomponente aufweist, welche senkrecht auf einer Zuführebene der Zuführeinrichtung der Wirbelstromabscheidevorrichtung steht. Dadurch kann in besonders vorteilhafter Weise realisiert werden, dass durch die kinetische und die potentielle Energie, welche die NE-Metallfraktion durch die Zuführeinrichtung, die Wirbelstromeinrichtung und ggf. die Höhe der Zuführeinrichtung erhalten, ausreichend ist, um ohne weitere Fördereinrichtungen dem Sortierspalt oder den Sortierspalten zugeführt zu werden und ggf. den Sortierspalt zu passieren. Mit anderen Worten ausgedrückt bedeutet dies, dass die kinetische und/oder potentielle Energie, die die NE-Metallfraktion beim Verlassen der Zuführeinrichtung der Wirbelstromabscheidevorrichtung aufweist, ausreichend ist, um zu dem zumindest einen Sortierspalt zu gelangen und die Ausrichtung des Sortierspalts darüber hinaus derart durch die Durchtrittsebene festgelegt ist, dass auch ein Passieren des Sortierspalts auf der Grundlage der kinetischen und potentiellen Energie, insbesondere ohne zusätzliche Beschleunigung durch eine Transport- oder Fördereinrichtung erfolgen kann. Negativ ausgedrückt bedeutet dies, dass die Durchtrittsebene des zumindest einen Sortierspalts nicht in einer waagerechten, insbesondere parallel zur Zuführebene verlaufenden Ebene führt.

Eine weitere besonders vorteilhafte Ausführungsform der Wirbelstromabscheidevorrichtung sieht vor, dass der zumindest eine Sortierspalt eine Durchtrittsebene aufweist, in der NE-Gegenstände, insbesondere Münzen, den Sortierspalt passieren können, wobei die Durchtrittsebene senkrecht auf einer Zuführebene der Zuführeinrichtung steht. Dadurch wird in besonders vorteilhafter Weise der Durchtritt der NE-Gegenstände, insbesondere Münzen, durch den Sortierspalt oder die Sortierspalten hauptsächlich oder im Wesentlichen aufgrund der Gewichtskraft oder der potentiellen Energie der NE-Gegenstände oder Münzen gewährleistet.

Die vorliegende Erfindung führt auch zu einer Sortiervorrichtung, wie oben beschrieben, zum Aussortieren von Münzen aus einer Materialschüttung, insbesondere unter Verwendung einer Wirbelstromabscheidevorrichtung.

Außerdem führt die vorliegende Erfindung auf die Verwendung einer Wirbelstromabscheidevorrichtung, wie oben beschrieben, zum Aussortieren von Münzen aus einer Materialschüttung.

Weitere Vorteile, Merkmale und Einzelheiten der Erfindung ergeben sich aus der nachfolgenden Beschreibung bevorzugter Ausführungsbeispiele sowie anhand der die Erfindungsgegenstände schematisch darstellenden Zeichnungen.

Diese zeigen in:
- Fig. 1: eine seitliche Schnittdarstellung durch eine erfindungsgemäße Sortiervorrichtung gemäß einer ersten Ausführungsform;
- Fig. 2: eine seitliche Schnittdarstellung durch eine erfindungsgemäße Sortiervorrichtung gemäß einer zweiten Ausführungsform;
- Fig. 3: eine perspektivische Ansicht einer erfindungsgemäßen Sortiervorrichtung gemäß einer dritten Ausführungsform;
- Fig. 4: eine seitliche Schnittdarstellung einer erfindungsgemäßen Sortiervorrichtung gemäß der dritten Ausführungsform sowie einer erfindungsgemäßen Wirbelstromabscheidevorrichtung;
- Fig. 5: eine Frontalansicht auf eine erfindungsgemäße Wirbelstromabscheidevorrichtung gemäß einer ersten Ausführungsform; und
- Fig. 6: eine schematische Rückansicht einer erfindungsgemäßen Wirbelstromabscheidevorrichtung gemäß einer ersten Ausführungsform.

In der nachfolgenden Beschreibung wird eine Anwendung der Erfindungsgegenstände für eine Münzrückgewinnung aus einer Schlacke über einen Zwischensortierschritt einer die Münzen umfassenden NE-Metallfraktion beschrieben. Die erfindungsgemäßen Vorrichtungen lassen sich jedoch auch mit anderen Materialschüttungen betreiben, wobei die erfinderischen Vorteile und Weiterentwicklungen ebenfalls realisiert werden. Beispielsweise kann die Vorrichtung auch mit einer Metallschüttung betrieben werden, die beispielsweise aus der KFZ-Verwertung stammt. Auch aus einer Schwermetallschüttung können Münzen zurückgewonnen werden. Gleichermaßen kann auch aus einer bereits vorsortierten weitgehend reinen NE-Metallschüttung mit den beschriebenen Vorrichtungen eine effektive Münzrückgewinnung unter zusätzlicher Aufkonzentrierung der NE-Metallfraktion durchgeführt werden.

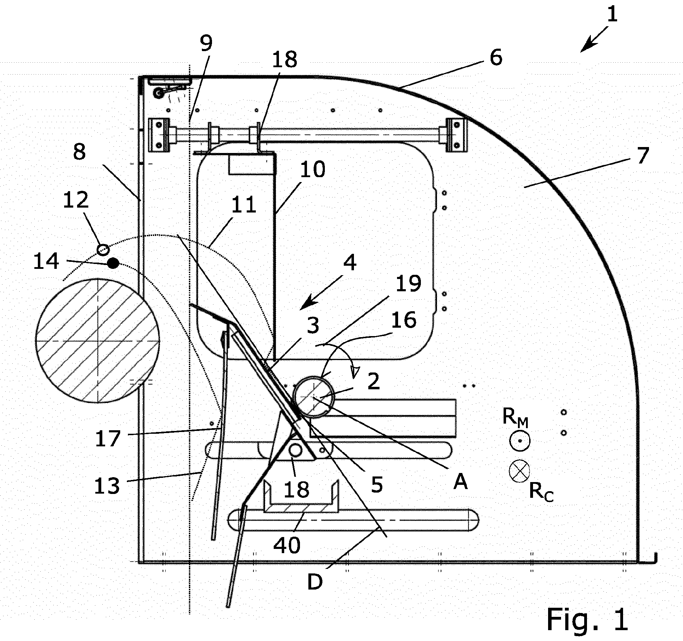

Fig. 1 zeigt eine Sortiervorrichtung 1, bei der zwischen einer Walze 2 und einer Prallplatte 3 einer Flugbahnseparatoreinrichtung 4 ein Sortierspalt 5 ausgebildet ist. Die Flugbahnseparatoreinrichtung 4 wie auch die Walze 2 sind dabei innerhalb einer Abwurfhaube 6, also in einem Haubeninnenraum 7 der Abwurfhaube 6 angeordnet. Die Abwurfhaube 6 umfasst eine Eintrittsfläche 8, die in der Darstellung der Fig. 1 senkrecht auf der Zeichenebene steht oder verläuft und durch die eine Schlacke oder eine Müllverbrennungsschlacke in die Abwurfhaube 6 eingebracht werden kann. Dabei ist mit einer der Sortiervorrichtungen 1 vorgeschalteten Abscheidevorrichtung, beispielsweise einer in der Fig. 1 nicht dargestellten Wirbelstromabscheidevorrichtung erreichbar, dass die in die Eintrittsfläche 8 der Sortiervorrichtung 1 eintretende Schlacke je nach Material oder Materialeigenschaft eine unterschiedliche Trajektorie oder Flugbahn aufweist. Beispielsweise kann vorgesehen sein, dass die Flugbahn oder die Flugbahnen von Nichteisen-Gegenständen derart durch die Eintrittsfläche 8 in die Sortiervorrichtung 1 eingebracht werden, dass diese eine parallel zur Eintrittsfläche 8 parallel verlaufende Separatorfläche 9 oberhalb des Prallblechs oder der Prallplatte 3 der Flugbahnseparatoreinrichtung 4 passieren. Gleichfalls kann vorgesehen sein, dass andere, in der Schlacke enthaltene Fraktionen, wie beispielsweise Schlacke die Separatorfläche 9 unterhalb der Prallplatte 3 passieren. Über den oberhalb der Prallplatte 3 angeordneten Prallvorhang 10 wird sichergestellt, dass weitestgehend unabhängig von der tatsächlichen Flugbahn oder Trajektorie der Nichteisen-Metallgegenstände einer Nichteisen-Metallfraktion die Nichteisen-Metallgegenstände der Walze 2 und der zwischen der Walze 2 und der Prallplatte 3 ausgebildeten Sortierspalt 5 zugeführt werden. Eine beispielhafte Trajektorie 11 zeigt eine mögliche Flugbahn eines beispielhaften Nichteisen-Metallgegenstands 12. Eine zweite beispielhafte Trajektorie 13 zeigt eine Flugbahn eines Schlackegegenstandes 14. Für den Fall, dass der NE-Metallgegenstand 12 in zumindest einer Raumrichtung dünn genug oder schmal genug ist, kann er den Sortierspalt zwischen der um die Drehachse A rotierbar gelagerten Walze 2 und der Prallplatte 3 passieren und in den Aufnahmebehälter oder Bevorratungsbehälter 15 geführt werden. Ein NE-Metallgegenstand 12, der jedoch in keiner Dimension oder Raumrichtung den Sortierspalt 5 passieren kann, wird durch die Walze 2, insbesondere durch eine Strukturierung der Oberfläche 16 der Walze 2 senkrecht zur Zeichenebene der Fig. 1 vom Sortierspalt 5 weg kraftbeaufschlagt.

Wie anhand der Fig. 1, insbesondere anhand der Darstellung der Trajektorie 11 des Nichteisen-Metallgegenstandes 12 verdeutlich wird, ist die Walze 2 derart bezüglich der Flugbahnseparatoreinrichtung 4 angeordnet, dass eine von der Flugbahnseparatoreinrichtung 4 abseparierte Nichteisen-Metallfraktion durch die Gewichtskraft der Nichteisen-Metallgegenstände in Richtung des Sortierspalts 5 geführt wird. Die Drehachse A der Walze 2 ist im Beispiel der Fig. 1 parallel zur Eintrittsfläche 8 der Abwurfhaube 6 angeordnet. Außerdem erstreckt sich die Drehachse A der Walze 2 waagerecht. Gegebenenfalls kann die Drehachse A der profilierten Walze 2, entgegen der Darstellung der Fig. 1, auch um 3° bis 5° in Austragsrichtung der den Sortierspalt 5 nicht passierenden NE-Metallgegenstände geneigt sein. Die Prallplatte 3 der Flugbahnseparatoreinrichtung 4 ist bevorzugt aus rostfreiem Stahl, insbesondere aus VA-Stahl hergestellt, um Anhaftungen zu vermeiden und Verschleiß zu reduzieren. Außerdem ist die Wahl von VA-Stahl besonders vorteilhaft, da dadurch die unerwünschte Aufmagnetisierung der Prallplatte beim Zusammenwirken mit einer Wirbelstromabscheidevorrichtung verhindert werden. Die Flugbahnseparatoreinrichtung 4, insbesondere die Prallplatte 3, der Prallvorhang 10 und die mit der Prallplatte 3 verbundenen zusätzlichen Prallvorhänge oder Gummivorhänge 17 sind über Bewegungsmittel 18 beweglich in der Abwurfhaube 6, insbesondere im Haubeninnenraum 7 beweglich angeordnet und/oder gelagert. Dadurch kann die Position und/oder die Ausrichtung der Flugbahnseparatoreinrichtung 4 und deren Bestandteile einzeln oder kumulativ verändert und eingestellt werden.

Die Walze 2 der Sortiervorrichtung 1 kann in der Fig. 1 nicht dargestellte Lagermittel, insbesondere beidseitig angeordnete oder eine beidseitige Lagerung bewirkende Lagermittel aufweisen. Die Lagermittel sind bevorzugt zumindest mit der Prallplatte 3 der Flugbahnseparatoreinrichtung 4, insbesondere mit den Bewegungsmitteln 18 der Prallplatte 3 lösbar verbunden, wobei die Abwurfhaube 6 bevorzugt ebenfalls in der Fig. 1 nicht dargestellte Bewegungsmittel zur Positionsveränderung der Lagermittel der Walze 2 aufweist. Dadurch kann erreicht werden, dass in einem verbundenen Zustand die Lagermittel der Walze mit den Lagermitteln 18 der Prallplatte zusammen bewegt werden.

Die Walze 2 kann Lagermittel 18 aufweisen, mit der eine beidseitige Lagerung, bevorzugt im Haubeninnenraum 7 der Abwurfhaube 6 ermöglicht wird. Bevorzugt können die Lagermittel oder die beidseitigen Lagermittel der Walze 2, die in der Fig. 1 nicht separat dargestellt sind, beweglich ausgebildet sein oder bewegbar ausgebildet sein. Besonders bevorzugt sind die Lagermittel mit Bewegungsmitteln versehen oder mit Bewegungsmitteln verbunden, die eine Positionsveränderung der Lagermittel ermöglichen. Dadurch wird beispielsweise erreicht, dass die Walze 2 translatorisch im Haubeninnenraum 7 der Abwurfhaube 6 bewegt werden kann. Zudem kann vorteilhaft vorgesehen sein, dass die Bewegungsmittel der Lagermittel der Walze 2 mit den Bewegungsmitteln 18 der Flugbahnseparatoreinrichtung 4 koppelbar oder lösbar verbunden sind, sodass in einem verbundenen Zustand der Walze 2 oder deren Lagermittel mit der Flugbahnseparatoreinrichtung 4, insbesondere mit der Prallplatte 3 über die jeweiligen Bewegungsmittel eine gemeinsame Bewegung, insbesondere eine gemeinsame Verschiebung der Prallplatte 3 oder der Flugbahnseparatoreinrichtung 4 und der Walze 2 ausgeführt werden kann. Dadurch wird erreicht, dass die Flugbahnseparatoreinrichtung 4, insbesondere die Prallplatte 3 optimal auf die jeweiligen Flugbahneigenschaften der durch die Eintrittsfläche 8 eintretenden Gegenstände ausgerichtet werden kann und somit optimal eine Abtrennung oder Aussortierung einer NE-Metallfraktion erreicht werden kann und gleichzeitig der Sortierspalt 5 zwischen der Prallplatte 3 und der Walze 2 an sich unverändert bleibt, selbst wenn die Position der Walze 2 zusammen mit der Prallplatte 3 und/oder der Flugbahnseparatoreinrichtung 4 verändert wird. In einem gelösten Zustand der lösbaren Verbindung zwischen der Flugbahnseparatoreinrichtung 4 und der Walze 2, insbesondere über eine Kopplung der jeweiligen Bewegungsmittel, kann bevorzugt eine Wartung ausgeführt werden, eine Justage des Sortierspalts 5 erfolgen oder andere unabhängige Bewegungen der Flugbahnseparatoreinrichtung 4 und der Walze 2 ausgeführt werden. Im Beispiel der Fig. 1 ist der in der Fig. 1 nicht dargestellte Antrieb der Walze 2 zur Rotation der Walze 2 um die Drehachse A derart ausgebildet, dass eine Rotation der Walze 2 um die Achse A im Uhrzeigersinn erfolgt, wie mit dem Richtungspfeil 19 in der Fig. 1 skizziert. Durch die Rotation im Uhrzeigersinn wird ermöglicht, dass die durch die Gewichtskraft in Richtung des Sortierspalts geführten NE-Metallgegenstände nicht im Bereich des Sortierspalts 5 zwischen der Prallplatte 3 und der Walze 2 eingeklemmt werden.

Fig. 1 zeigt anhand von Richtungspfeilen, die senkrecht auf der Zeichenebene stehen die Münzaustragsrichtung R_{C} und die Metallaustragsrichtung R_{M}, welche im Beispiel der Fig. 1 gegenläufig oder entgegengesetzt verlaufen. Die Münzaustragsrichtung R_{C} wird im Wesentlichen durch die Münzaustragsvorrichtung 40 bestimmt. Die Metallaustragsrichtung R_{M} wird wesentlich durch die Drehrichtung 19 der Walze 2 und die Profilierung der Oberfläche 16 der Walze 2 bestimmt.

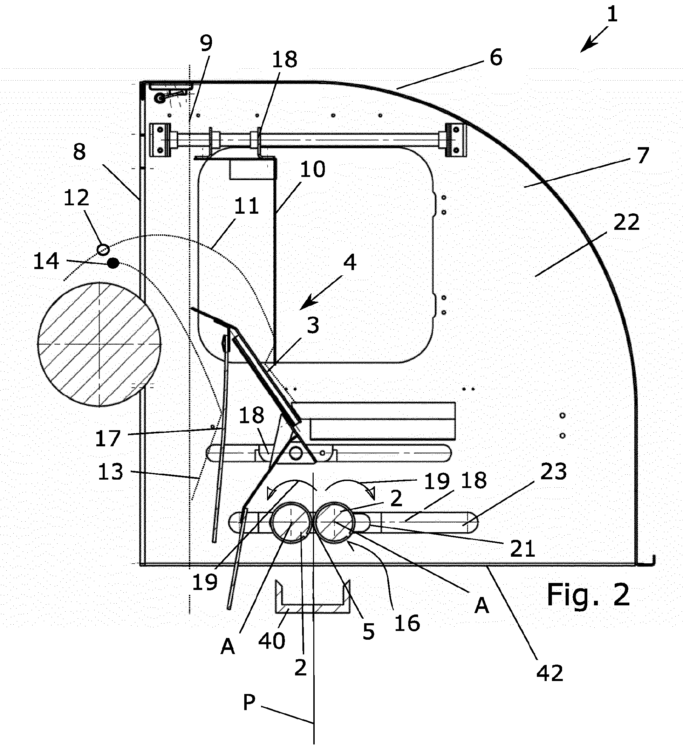

Die Fig. 2 zeigt ebenfalls eine erfindungsgemäße Sortiervorrichtung 1, bei der eine Flugbahnseparatoreinrichtung 4 im Haubeninnenraum 7 einer Abwurfhaube 6 angeordnet ist. Der wesentliche Unterschied zwischen der Darstellung der Fig. 1 und der Darstellung der Fig. 2 besteht darin, dass die Ausführungsform der Fig. 2 über zwei Walzen 2 verfügt, deren zueinander parallele Drehachsen A parallel zur Eintrittsfläche 8 und waagerecht verlaufen. Wie auch schon mit Bezug auf die Fig. 1 beschrieben kann eine Neigung der Drehachsen A um 3° bis 5° zur Waagerechten vorgesehen sein, um den Austrag der nicht durch den Sortierspalt 5 hindurch tretenden NE-Metallgegenstände zu fördern. Dadurch wird ein Sortierspalt 5 beidseitig von den zwei Walzen 2 begrenzt oder gebildet. Ebenfalls wird dadurch eine senkrechte Durchtrittsebene P gebildet, die zudem senkrecht auf der Zeichenebene steht. Das Walzenpaar 20 umfasst die beiden Walzen 2 und ist dabei mit beidseitigen Lagerungsmitteln 21 an den beiden Enden der Walzen 2 oder den Drehachsen der Walzen 2 in oder an Seitenwänden 22 der Abwurfhaube 6 gelagert, wobei die Lagerungsmittel 21 Bewegungsmittel 18 umfassen, die eine Bewegung der Walzen 2, insbesondere eine Verschiebung des Walzenpaars 20 entlang von in den Seitenwänden 22 ausgebildeten Langlöchern 23 ermöglichen. Durch eine in der Fig. 2 ebenfalls nicht dargestellte lösbare Verbindung zwischen den Bewegungsmitteln 18 des Walzenpaares 20 und den Bewegungsmitteln 18 der Flugbahnseparatoreinrichtung 4, insbesondere der Prallplatte 3 kann eine gemeinsame Verstellung oder Bewegung, insbesondere eine gemeinsame Verschiebung der Flugbahnseparatoreinrichtung 4 mit dem Walzenpaar 20 erreicht werden. Diese gemeinsame Verschiebung im verbundenen Zustand der lösbaren Verbindung sorgt dafür, dass jeweils unabhängig von der Positionierung, und ggf. Ausrichtung der Flugbahnseparatoreinrichtung 4, insbesondere der Prallplatte 3, die Walzen 2 des Walzenpaars 20 derart bzgl. der Flugbahnseparatoreinrichtung 4 angeordnet sind, dass eine von der Flugbahnseparatoreinrichtung 4 abseparierte Nichteisen-Metallfraktion durch die Gewichtskraft der Nichteisen-Metallgegenstände in Richtung des Sortierspalts 5 geführt werden. Damit kann mit der Sortiervorrichtung 1 gemäß der zweiten Ausführungsform der Fig. 2 ebenfalls sichergestellt werden, dass eine in die Eintrittsfläche 8 eintretende Schlacke, soweit die Flugbahn eine materialcharakteristische Eigenschaft oder einen Verlauf aufweisen, ohne weitere Fördereinrichtungen oder Beförderungsmittel, nicht nur eine Abseparierung oder Abtrennung einer NE-Metallfraktion erreicht, sondern darüber hinaus lediglich aufgrund der Gewichtskraft der NE-Metallgegenstände ein Zuführen zu dem Sortierspalt 5 und damit die Möglichkeit zur Aussortierung von Münzen oder ähnlich geformten Gegenständen, aus der NE-Metallfraktion ermöglicht und erreicht.

Wie in der Fig. 2 zu erkennen ist, sind alle Drehachsen A oberhalb einer Unterkante 42 der Abwurfhaube 6 angeordnet, so dass eine kompakte Bauform mit genügend bodenseitigem Platz, beispielsweise zur Anordnung der Münzaustragsvorrichtung 40, erreicht wird.

Anhand der beispielhaften Flugbahn 11 eines Nichteisen-Metallgegenstandes 12, wird verdeutlicht, wie der mehrstufige ununterbrochene Sortierprozess innerhalb der Sortiervorrichtung 1 vonstatten geht. Gegenstände, insbesondere Münzen, die den Sortierspalt 5 passieren können, werden, ebenfalls abermals ausschließlich durch deren Gewichtskraft auf die Münzaustragsvorrichtung 40 gefördert. Die Münzaustragsvorrichtung 40 kann besipieslweise durch eine Vibrorinne oder ein Förderband realisiert werden. NE-Metallgegenstände, die den Sortierspalt 5 nicht passieren können, werden durch eine Kraftbeaufschlagung seitens der Walzen 2 des Walzenpaares 20, insbesondere aufgrund einer Oberflächenstrukturierung der Oberflächen 16 der Walzen 2, nicht zuletzt durch die Rotation der Walzen 2 um die Drehachse A vom Sortierspalt 5 weg kraftbeaufschlagt. Im Beispiel der Fig. 2 erfolgt die Kraftbeaufschlagung der den Sortierspalt 5 nicht passierenden Gegenstände, wie auch in der Fig. 1, senkrecht zur Zeichenebene, also entlang der Drehachse A. Dementsprechend erfolgt das Austragen der den Sortierspalt 5 nicht passierenden Gegenstände über die Walzen hinweg in der Drehrichtung 19 der Walzen oder entlang der Drehachsen A der Walzen 2 in Richtung und gegebenenfalls durch die Seitenwände oder die Seitenwand 22 der Abwurfhaube 6.

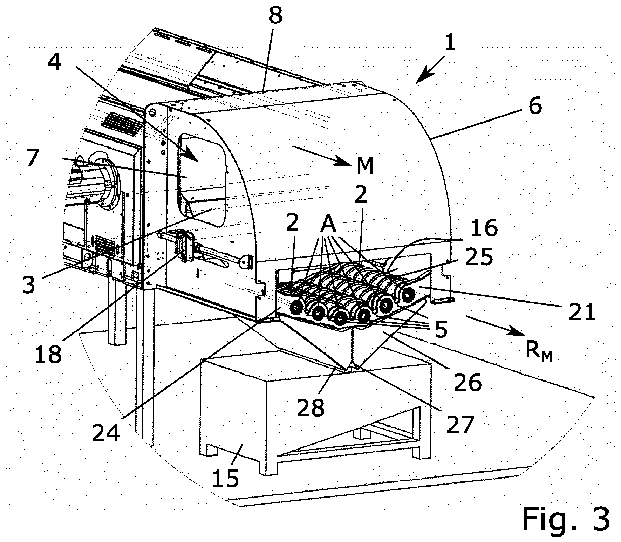

Die Fig. 3 zeigt eine dritte Ausführungsform der erfindungsgemäßen Sortiervorrichtung 1. Im Gegensatz zu den Sortiervorrichtungen der Fig. 1 und 2 sind die Drehachsen A der insgesamt sechs Walzen 2 senkrecht zur Eintrittsfläche 8 der Abwurfhaube 6 angeordnet. Die an den Walzenenden, also an den axialen Walzenenden beidseitig angeordneten Lagermittel 21 sind als Lagerbügel oder Lagerträger 24 ausgebildet. Dabei sind die Lagerträger 24 derart ausgestaltet, dass die Walzen 2, und insbesondere auch die Drehachsen A der Walzen 2 v-förmig zueinander angeordnet sind. In der Darstellung der Fig. 3 ist ebenfalls die Profilierung 25 der Oberfläche 16 der Walzen 2 zu erkennen, die dafür sorgt, dass Gegenstände, die nicht durch die zwischen den Walzen 2 ausgebildeten Sortierspalten 5 hindurchtreten können durch die Rotation der Walzen 2 mittels eines in der Fig. 3 nicht dargestellten Antriebs, in einer Austragsrichtung R von den Sortierspalten 5 weg kraftbeaufschlagt werden. Die Drehachsen A der Walzen 2 können auch bei dieser Ausgestaltung entweder waagerecht verlaufen oder um 3° bis 5° zur Wagerechten in der Metallaustragsrichtung R_{M} oder Förderrichtung geneigt sein. Die durch die Sortierspalten 5 hindurchtretenden NE-Metallgegenstände, insbesondere Münzen, werden durch die unter den Walzen 2 angeordneten Verengungsmittel 26 auf einen gemeinsamen Auswurfspalt 27 verengt oder gelenkt, sodass die NE-Metallgegenstände, insbesondere Münzen in die unter der Sortiervorrichtung 1 angeordneten Bevorratungsbehälter 15 gelangen können, der seinerseits ebenfalls nur einen schmalen Eintrittsspalt 28 aufweist und somit das in dem Bevorratungsbehälter 15 befindliche Münzkonzentrat vor unbefugtem Zugriff schützt.

Um den Sortierspalten 5 eine möglichst reine Nichteisen-Metallfraktion zuzuführen, ist auch in der Ausführungsform der Fig. 3 vorgesehen, dass im Haubeninnenraum 7 der Abwurfhaube 6 eine Flugbahnseparatoreinrichtung 4, insbesondere mit einer Prallplatte 3, vorgesehen ist, sodass mit einer der Sortiervorrichtungen 1 vorgeschalteten Abscheidevorrichtung, die eine materialabhängige Flugbahn von Gegenständen und Bestandteilen einer Schlacke, insbesondere Müllverbrennungsschlacke erzeugt, möglichst nur Nichteisen-Metallgegenstände die Flugbahnseparatoreinrichtung 4 oberhalb der Prallplatte 3 passieren und im Anschluss daran durch ihre Gewichtskraft in Richtung der Sortierspalten 5 geführt werden.

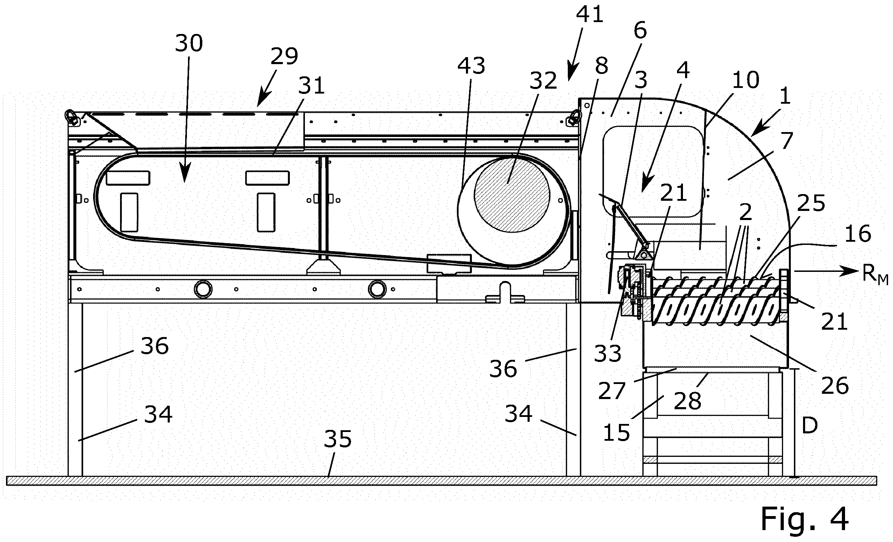

Die Fig. 4 zeigt eine Seitenansicht der Sortiervorrichtung 1 gemäß der Ausführungsform der Fig. 3 in Verbindung mit einer Wirbelstromabscheidevorrichtung 29. Die Wirbelstromabscheidevorrichtung 29 umfasst eine Zuführeinrichtung 30 in Form eines Förderbandes 31, mit dem Schlacke aus einer Müllverbrennung oder thermischen Müllverwertung befördert werden kann. Außerdem umfasst die Wirbelstromabscheidevorrichtung 29 eine Wirbelstromeinrichtung 41, welche eine Magnettrommel 32 in einer Poltrommel 43 umfasst. Mittels der Wirbelstromeinrichtung 41, welche endseitig an der Zuführeinrichtung 30 angeordnet ist, kann die Flugbahn von Nichteisen-Gegenständen der auf der Zuführeinrichtung 30 transportierten oder beförderten Schlacke nach Verlassen der Zuführeinrichtung 30 selektiv beeinflusst werden. Insbesondere können Nichteisen-Gegenstände nach Verlassen der Zuführeinrichtung 30 durch die Wirbelstromeinrichtung 41 mehr kinetische Energie aufweisen als beispielsweise Schlackebestandteile der Schlacke und somit nach Eintritt durch die Eintrittsfläche 8 der Sortiervorrichtung die Flugbahnseparatoreinrichtung 4 oberhalb der Prallplatte 3 passieren, wohingegen Schlacke weniger kinetische Energie aufweist und nach Eintritt in die Sortiervorrichtung 1 durch die Eintrittsfläche 8 die Flugbahnseparatoreinrichtung 4 unterhalb des Prallplatte 3 passiert.

Wie auf der seitlichen Darstellung der Fig. 4 zu erkennen, umfasst die Sortiervorrichtung 1 ebenfalls mehrere Walzen 2 mit einer Oberfläche 16 mit einer Profilierung 25 und eine Mehrzahl von zwischen den Walzen 2 ausgebildeten oder von den Walzen 2 begrenzten Sortierspalten 5. Die Darstellung der Fig. 4 zeigt, die mit Bezug auf die Fig. 3 bereits beschriebenen Verengungsmittel 26 unterhalb der Walzen 2, die zu dem Auswurfspalt 27 führen, welcher wiederum fluchtend mit einem Eintrittsspalt 28 des Bevorratungsbehälters 15 angeordnet ist. An einer der Eintrittsfläche 8 zugewandten Seite oder einem der Eintrittsfläche 8 zugewandten Ende der Walzen 2 ist der Antrieb 33 zur Rotation der Walzen 2 um in der Fig. 4 nicht dargestellte Drehachsen A angeordnet. Der Antrieb 33 ist teilweise oder vollständig im Haubeninnenraum 7 der Abwurfhaube 6 angeordnet und an den Lagermitteln 21 befestigt. Die Wirbelstromabscheidevorrichtung 29 umfasst ein Gestell 34, welches die Wirbelstromabscheidevorrichtung 29 von dem Untergrund 35 beabstandet. Das Gestell 34, insbesondere die Stützen 36 des Gestells 34 sind dabei derart ausgebildet, dass zwischen dem Auslass, insbesondere dem Auswurfspalt 27, des zumindest einen Sortierspalts 5, also zwischen den unterhalb der Walzen 2 angeordneten Verengungsmitteln 26 und dem Untergrund 35 ein Abstand ausgebildet wird, der ausreichend hoch oder ausreichend groß ist, um dort den Bevorratungsbehälter 15 anzuordnen. Vorteilhaft kann vorgesehen sein, dass der Abstand zwischen dem Auslass oder Auswurfspalt 27 der Verengungsmittel 26 und dem Untergrund 35 mindestens 40cm, bevorzugt mindestens 60cm, besonders bevorzugt mindestens 80cm beträgt.

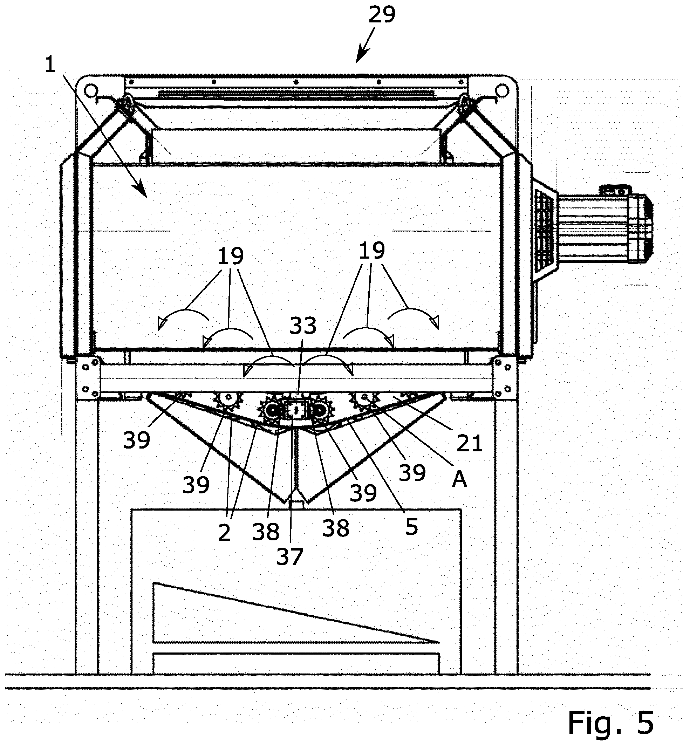

Die Fig. 5 zeigt eine weitere Ansicht der Sortiervorrichtung 1 sowie der Wirbelstromabscheidevorrichtung 29 gemäß der Ausführungsform oder Ausführungsformen, wie sie bereits in den Fig. 3 und 4 dargestellt ist. Neben den Lagerungsmitteln 21 der Walzen 2 ist in der Darstellung der Fig. 5 auch eine mit dem Antrieb 33 verbundene und mittelbar auf die Achsen A der Walzen 2 wirkende Antriebs- und Getriebeeinheit dargestellt. Diese umfasst ein Getriebe 37, welches an zwei entgegengesetzten Seiten jeweils einen Abtrieb 38 aufweist. Der Abtrieb 38 kann wiederum ein Stirnrad umfassen, welches mit den Drehachsen A verbundenen Zahnrädern 39 im Eingriff steht. Dadurch kann durch einen gemeinsamen oder einzigen Antrieb 33 erreicht werden, dass die beiden mittleren Walzen 2 und über eine entsprechende Kopplung der jeweiligen Zahnräder 39 auch die weiteren Walzen 2 angetrieben oder rotiert werden. Besonders vorteilhaft kann vorgesehen sein, dass die insgesamt sechs Walzen 2 über den Antrieb 33 in einer Art und Weise angetrieben werden, wie es die Richtungspfeile 19 veranschaulichen. Dies bedeutet, dass die mittleren Walzen 2 gegenläufig rotieren, sodass die Oberflächen 16 der Walzen 2 an den Walzen im Bereich des Sortierspalts 5 zur Anlage kommende Gegenstände, insbesondere Nichteisen-Metallgegenstände, zumindest auch entgegen der Gewichtskraft beschleunigen, um ein Verklemmen von Gegenständen zwischen den Walzen 2, insbesondere im Sortierspalt 5 zu vermeiden. Zusätzlich zu der Kraftbeaufschlagung entgegen dem Gewichtskraftvektor kann selbstverständlich durch die Profilierung 25 der Oberfläche 16 der Walzen 2 auch eine zusätzliche Kraftkomponente, nämlich aus der Zeicheneben der Fig. 5 heraus, erfolgen, die zum Austrag der nicht durch den oder die Sortierspalten hindurchtretenden NE-Metallgegenstände aus der Sortiervorrichtung 1 heraus beitragen. Die Walzen 2 können, wie mit den Bewegungspfeilen 19 angedeutet, darüber hinaus zwei Gruppen von gleichsinnig rotierenden Walzen, nämlich eine linke, gegen den Uhrzeigersinn rotierende Walzengruppe und eine rechte im Uhrzeigersinn rotierende Walzengruppe ausbilden.

Ein einziger gemeinsamer Antrieb 33 für die Walzen 2 oder die Walzen einer Walzenbaugruppe 44 hat auch den Vorteil, dass bei einer Störung alle Walzen 2 stillgelegt werden und eine Beschädigung der Vorrichtung, insbesondere der Walzen vermieden wird.

Bevorzugt kann der Antrieb 33 zum Betrieb mit einer variablen, insbesondere stufenlos einstellbaren, Frequenz eingerichtet sein. Dadurch kann die von Oberflächenprofilen der Walzen 2 überstrichene Fläche eingestellt und dadurch der Sortierspalt 5 variiert werden. Außerdem kann durch eine Veränderung der Antriebsfrequenz oder Drehzahl die Vortriebsgeschwindigkeit der NE-Metallgegenstände entlang der Drehachsen A der Walzen 2 variiert und dadurch die Verweildauer der NE-Metallgegenstände im Bereich der Sortierspalten 5 eingestellt werden. Diese Einstellmöglichkeiten erlauben, dass über die Veränderung der Drehzahl oder Frequenz des Antriebs 33 die Sortierqualität verändert und eingestellt werden.

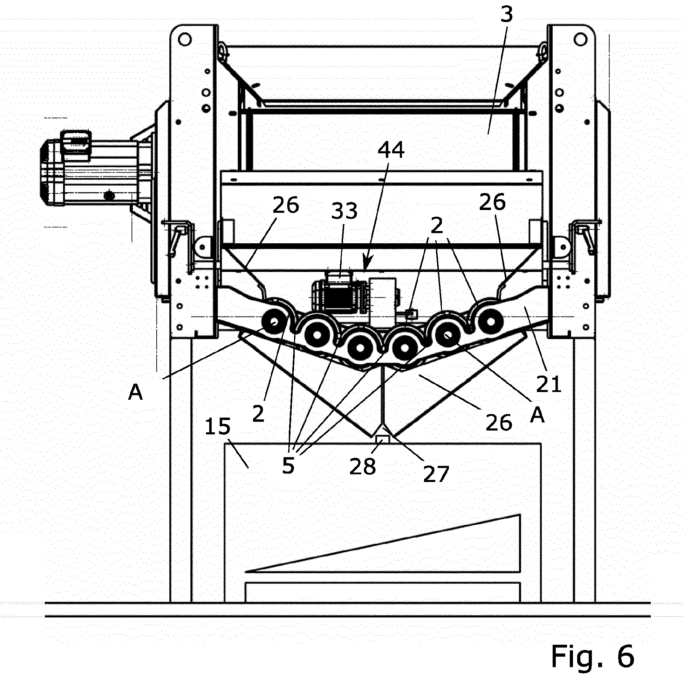

In der Darstellung der Fig. 6, welche eine Darstellung in der entgegengesetzten Richtung wie die Darstellung der Fig. 5 zeigt, sind abermals der Antrieb 33 der insgesamt sechs Walzen 2 dargestellt. Die sechs Walzen 2 bilden insgesamt fünf Sortierspalten 5 aus. Damit ein unsortierter Durchtritt von NE-Metallgegenständen seitlich zu den äußeren Walzen 2 verhindert wird und darüber hinaus ein möglichst effektives Aussortieren von Münzen durch die förmig angeordneten oder gelagerten Walzen 2 ermöglicht wird, sind oberhalb der Walzen 2 ebenfalls Verengungsmittel 26 angeordnet. In Abweichung zur Darstellung der Fig. 6 kann vorteilhaft vorgesehen sein, dass die Verengungsmittel 26 oberhalb der Walzen 2 über der Drehachse A der jeweils äußeren Walze enden. Dadurch wird auch ein Verklemmen zwischen der äußeren Walze 2 und den Verengungsmitteln 26 effektiv verhindert.

In der Fig. 6 abermals gut zu erkennen sind die unterhalb der Walzen 2 angeordneten Verengungsmittel, die den Auswurfspalt 27 ausbilden, der wiederum fluchtend mit dem Eintrittsspalt 28 des Bevorratungsbehälters 15 angeordnet ist.

Die Darstellung der Fig. 6 lässt auch eine Walzenbaugruppe 44 erkennen, welche zumindest die Lagermittel 21, eine Vielzahl von Walzen 2 und einen der Walzenbaugruppe 44 zugeordneten Antrieb 33 umfasst. Die Walzenbaugruppe 44 kann auch mit mehr oder weniger Walzen 2 zum Einsatz ausgeführt werden. Besonders bevorzugt werden über den Antrieb 33 zwei mittlere Walzen 2 direkt angetrieben und die weiteren Walzen 2 mittelbar über die angetriebenen mittleren Walzen 2 angetrieben.

In den Darstellungen der Fig. 3 bis 6 kann die Zuführeinrichtung 30 der Wirbelstromabscheidevorrichtung 29 eine Breite von etwa 1m aufweisen. In diesem Fall hat sich die Ausführungsform der Fig. 3 bis 6 als vorteilhaft erwiesen, in der insgesamt sechs Walzen 2 v-förmig angeordnet sind und ggf. die Verengungsmittel 26 oberhalb der Walzen 2 eine Konzentrierung oder Führung der durch die Flugbahnseparatoreinrichtung 4 abgetrennten Nichteisen-Metallfraktion bewirken. Bei einer Wirbelstromabscheidevorrichtung 29 mit einer weiteren Zuführeinrichtung 30, beispielsweise mit einer Zuführeinrichtung von 1,5m Breite kann es vorteilhaft sein, wenn die Sortiervorrichtung 1 ebenfalls die in den Fig. 3 bis 6 dargestellte Ausführungsform mit sechs v-förmig angeordneten Walzen 2 aufweist, wobei die oberhalb der Walzen 2 angeordneten Verengungsmittel eine stärkere Verengung bewirken.

Bei einer Wirbelstromabscheidevorrichtung 29 mit einer Zuführeinrichtung, welche eine Breite von über 1,50m, insbesondere bis zu 2m aufweist, kann besonders vorteilhaft vorgesehen sein, dass insgesamt zwölf Walzen 2 vorgesehen werden, die dann zwei v-förmige Anordnungen umfassen, wie sie die Fig. 3 bis 6 zeigen. Dazu kann vorteilhaft vorgesehen sein, dass die Sortiervorrichtung zwei nebeneinander angeordnete identische Walzenbaugruppen 44 umfasst, wobei jede Walzenbaugruppe 44 zumindest zwei, bevorzugt vier besonders bevorzugt sechs oder acht Walzen mit entsprechenden Lagermitteln umfasst und insbesondere jede Walzenbaugruppe 44 einen eigenen unabhängigen Antrieb 33 umfasst, der bevorzugt zwei Walzen der jeweiligen Walzenbaugruppe 44 direkt antreibt. Besonders vorteilhaft können somit identische Baugruppen bei verschieden Sortiervorrichtungen und Wirbelstromabscheidevorrichtungen zum Einsatz kommen, was den Konstruktionsaufwand und die Herstellungskosten reduziert.

Dies bedeutet, dass die Walzenanordnung w-förmig ausgebildet sein kann, wobei ggf. abermals seitlich und in dem Verbindungsbereich zwischen den beiden V-Anordnungen Verengungsmittel 26 zum Einsatz kommen können. Bei einer Ausgestaltung mit zwei v-förmigen Sätzen von jeweils sechs Walzen 2 und fünf Sortierspalten 5 kann vorgesehen sein, dass die unterhalb der Walzen 2 angeordneten Verengungsmittel 26 auf die durch die Sortierspalten 5 tretende NE-Metallgegenstände, insbesondere Münzen, auf zwei separate Auswurfspalten 27 verengen oder führen. Dementsprechend können auch zwei Bevorratungsbehälter 15 eingesetzt werden. Alternativ könnte selbstredend auch ein gemeinsamer Bevorratungsbehälter 15 mit zwei den zwei Auswurfspalten 27 zugeordneten Eintrittsspalten 28 Verwendung finden.

### Bezugszeichenliste

- 1: Sortiervorrichtung
- 2: Walze
- 3: Prallplatte
- 4: Flugbahnseparatoreinrichtung
- 5: Sortierspalt
- 6: Abwurfhaube
- 7: Haubeninnenraum
- 8: Eintrittsfläche
- 9: Separatorfläche
- 10: Prallvorhang
- 11: Trajektorie/Flugbahn, Leiter
- 12: NE-Metallgegenstand
- 13: Trajektorie, Nichtleiter
- 14: Schlackegegenstand
- 15: Bevorratungsbehälter
- 16: Oberfläche
- 17: Gummivorhang
- 18: Bewegungsmittel
- 19: Richtungspfeil
- 20: Walzenpaar
- 21: Lagerungsmittel
- 22: Seitenwand
- 23: Langloch
- 24: Lagerträger
- 25: Profilierung
- 26: Verengungsmittel
- 27: Auswurfspalt
- 28: Eintrittsspalt
- 29: Wirbelstromabscheidevorrichtung
- 30: Zuführeinrichtung
- 31: Förderband
- 32: Magnettrommel
- 33: Antrieb
- 34: Gestell
- 35: Untergrund
- 36: Stutzen
- 37: Getriebe
- 38: Abtrieb
- 39: Zahnrad
- 40: Münzaustragsvorrichtung
- 41: Wirbelstromeinrichtung
- 42: Unterkante
- 43: Poltrommel
- 44: Walzenbaugruppe

- D: Abstand
- A: Drehachse
- R_{M}: Austragsrichtung der NE-Metallgegenstände
- R_{C}: Münzaustragsrichtung
- M: Mittellängsachse
- P: Durchtrittsebene

## Patentansprüche

1. Sortiervorrichtung zum Aussortieren von Münzen aus einer Materialschüttung, insbesondere einer Müllverbrennungsschlacke und/oder einer Metallschüttung, besonders bevorzugt einer Schwermetallschüttung und/oder NE-Metallschüttung, mit zumindest einem Sortierspalt (5) für Münzen, der jeweils von zumindest einer Walze (2) begrenzt ist, die mittels eines Antriebs (33) derart um eine Drehachse (A) rotierbar ist, dass nicht durch den Sortierspalt (5) förderbare Gegenstände, insbesondere NE-Metallgegenstände (12), von der Walze (2) in eine Richtung vom Sortierspalt (5) weg kraftbeaufschlagt, insbesondere auch entlang der Drehachse (A) der Walze, werden,
**gekennzeichnet durch**
eine Abwurfhaube (6), insbesondere für eine Wirbelstromabscheidevorrichtung (29), die in einem Haubeninnenraum (7) eine, insbesondere verstellbare, Flugbahnseparatoreinrichtung (4) aufweist, wobei in oder an der Abwurfhaube (6) die zumindest eine Walze (2) derart bezüglich der Flugbahnseparatoreinrichtung (4) angeordnet ist, dass eine von der Flugbahnseparatoreinrichtung (4) aus der Materialschüttung abseparierte NE-Metallfraktion durch die Gewichtskraft der NE-Metallgegenstände (12) in Richtung des Sortierspalts (5) geführt wird.

2. Sortiervorrichtung nach Anspruch 1,
**dadurch gekennzeichnet,**
**dass** sich die Drehachse (A) der zumindest einen Walze (2) parallel zu einer Eintrittsfläche (8) der Abwurfhaube (6) waagerecht, erstreckt oder einen Winkel von 3° bis 5° mit der Waagerechten einschließt.

3. Sortiervorrichtung nach Anspruch 1 oder 2,
**dadurch gekennzeichnet,**
**dass** der Sortierspalt (5) von einer Walze (2) und einer Prallplatte (3), insbesondere aus rostfreiem Stahl, der Flugbahnseparatoreinrichtung (4) begrenzt wird.

4. Sortiervorrichtung nach einem der Ansprüche 1 bis 3,
**dadurch gekennzeichnet, dass** die zumindest eine Walze (2) eine beidseitige Lagerung über beidseitig angeordnete Lagermittel aufweist, wobei die Lagermittel (21) bevorzugt so angeordnet sind, dass die Drehachse (A) der zumindest einen Walze (2) oberhalb einer Unterkante (42) der Abwurfhaube (6) verläuft.

5. Sortiervorrichtung nach einem der Ansprüche 1 bis 4,
**dadurch gekennzeichnet,**
**dass** die Abwurfhaube (6) Bewegungsmittel (18) zur Positionsveränderung von zumindest der Prallplatte (3) der Flugbahnseparatoreinrichtung (4) aufweist.

6. Sortiervorrichtung nach Anspruch 4 oder 5,
**dadurch gekennzeichnet,**
**dass** die Lagermittel (21) der zumindest einen Walze (2) mit zumindest einer Prallplatte (3) der Flugbahnseparatoreinrichtung (4) lösbar verbunden sind, wobei die Abwurfhaube (6) Bewegungsmittel (18) zur Positionsveränderung der Lagermittel (21) aufweist, und in einem verbundenen Zustand die Lagermittel (21) zusammen mit zumindest der Prallplatte (3) im Haubeninnenraum (7) der Abwurfhaube (6) bewegbar, insbesondere verschiebbar sind.

7. Sortiervorrichtung nach einem der Ansprüche 1 bis 5, **gekennzeichnet durch**
eine Münzaustragsvorrichtung (40) , die unterhalb des zumindest einen Sortierspalts (5) angeordnet ist, wobei die Münzaustragsvorrichtung (40) bevorzugt so ausgestaltet ist, dass die durch den zumindest einen Sortierspalt (5) hindurch tretenden NE-Metallgegenstände, insbesondere Münzen, in einer Münzaustragsrichtung (R_{C}) zu einer Seite der Sortiervorrichtung ausgetragen werden, insbesondere entgegengesetzt zu einer NE-Metallaustragsrichtung (R_{M}), in der die nicht durch den zumindest einen Sortierspalt hindurch tretenden NE-Metallgegenstände aus der Sortiervorrichtung ausgetragen werden.

8. Sortiervorrichtung nach Anspruch 1, 4 oder 5,
**dadurch gekennzeichnet,**
**dass** sich die Drehachse (A) der zumindest einen Walze (2) senkrecht zu einer Eintrittsfläche (8) der Abwurfhaube (6) waagerecht erstreckt oder einen Winkel von 3° bis 5° mit der Waagerechten einschließt..

9. Sortiervorrichtung nach einem der Ansprüche 1 bis 8,
**dadurch gekennzeichnet,**
**dass** der zumindest eine Sortierspalt (5) von zumindest zwei Walzen (2) begrenzt oder gebildet wird, wobei ein Antrieb (33) der Walzen (2) derart ausgebildet ist, dass zumindest zwei Walzen (2) eine gegenläufige Rotation ausführen.

10. Sortiervorrichtung nach Anspruch 9,
**gekennzeichnet durch**
vier, bevorzugt sechs, besonders bevorzugt acht, Walzen (2), wobei die Lagermittel (21) derart ausgestaltet sind, dass eine parallele, v-förmige oder u-förmige Anordnung der Walzen (2) erreicht wird.

11. Sortiervorrichtung nach Anspruch 9 oder 10,
**dadurch gekennzeichnet,**
**dass** ein gemeinsamer Antrieb (33) für zumindest zwei, insbesondere vier, bevorzugt sechs, besonders bevorzugt acht Walzen (2) vorgesehen ist, wobei mittels einem mit dem Antrieb (33) verbundenen Getriebe (37) die gegenläufige Rotation von zumindest zwei Walzen (2) erreicht wird.

12. Sortiervorrichtung nach einem der Ansprüche 9 bis 11,
**dadurch gekennzeichnet,**
**dass** der Antrieb (33) der Walzen (2) auf einer der Eintrittsfläche (8) der Abwurfhaube (6) zugewandten Seite der zumindest einen Walze (2), insbesondere innerhalb des Haubeninnenraums (7), angeordnet ist.

13. Sortiervorrichtung nach einem der Ansprüche 1 bis 12,
**dadurch gekennzeichnet,**
**dass** oberhalb der Walzen (2) Verengungsmittel (26), bevorzugt senkrecht zur Eintrittsfläche (8) der Abwurfhaube (6), angeordnet sind, so dass von der Flugbahnseparatoreinrichtung (4) kommende NE-Gegenstände (12) in Richtung einer Mittellängsachse der Abwurfhaube (6) gelenkt werden.

14. Sortiervorrichtung nach Anspruch 13,
**dadurch gekennzeichnet,**
**dass** die Verengungsmittel (26) walzenseitig zumindest über einer Drehachse (A) einer jeweils äußeren Walze (2) enden.

15. Sortiervorrichtung nach einem der Ansprüche 1 bis 14,
**dadurch gekennzeichnet,**
**dass** unterhalb der Walzen (2) Verengungsmittel (26) angeordnet sind, mit welchen die den Sortierspalt (5) oder die Sortierspalten (5) passierenden NE-Gegenstände (12), auf einen gemeinsamen Auswurfspalt (27) gelenkt werden.

16. Sortiervorrichtung nach Anspruch 15,
**dadurch gekennzeichnet,**
**dass** die unterhalb der Walzen (2) angeordneten Verengungsmittel (26) derart ausgestaltet sind, dass die Gewichtkraft der den Sortierspalt (5) oder die Sortierspalten (5) passierenden NE-Gegenstände (12) einen Austritt aus dem Auswurfspalt (27) ermöglichen.

17. Sortiervorrichtung nach einem der vorhergehenden Ansprüche, **gekennzeichnet durch**,
zwei nebeneinander angeordnete identische Walzenbaugruppen (44), wobei jede Walzenbaugruppe (44) zumindest zwei, bevorzugt vier, besonders bevorzugt sechs oder acht Walzen (2) mit entsprechenden Lagermitteln (21) umfasst und insbesondere jede Walzenbaugruppe (44) einen eigenen unabhängigen Antrieb (33) umfasst, der bevorzugt zwei Walzen (2) der jeweiligen Walzenbaugruppe (44) direkt antreibt.

18. Wirbelstromabscheidevorrichtung umfassend eine Zuführeinrichtung (30), insbesondere ein Förderband (31), welches zur Beförderung einer Materialschüttung, insbesondere einer Müllverbrennungsschlacke und/oder einer Metallschüttung, besonders bevorzugt einer Schwermetallschüttung und/oder NE-Metallschüttung, eingerichtet ist, umfassend zumindest eine Wirbelstromeinrichtung (41), welche endseitig an der Zuführeinrichtung (30) angeordnet ist und die Flugbahn (11) von NE-Gegenständen (12) der Materialschüttung nach Verlassen der Zuführeinrichtung (30) selektiv beeinflusst, wobei die Wirbelstromabscheidevorrichtung (29) Befestigungsmittel zu Befestigung einer der Zuführeinrichtung (30) nachgeordneten, Abwurfhaube (6) aufweist, weiter umfassend eine Sortiervorrichtung nach einem der Ansprüche 1 bis 17.

19. Wirbelstromabscheidevorrichtung nach Anspruch 18,
**gekennzeichnet durch**
ein Gestell (34) zur Beabstandung der Wirbelstromabscheidevorrichtung (29) von einem Untergrund (35), wobei das Gestell (34) derart ausgebildet ist, dass zwischen einem Auslass des zumindest einen Sortierspalts (5), insbesondere zwischen einem unterhalb der Walzen (2) angeordneten Verengungsmittel (26), und dem Untergrund (35) ein Abstand (D) von mindestens 40cm, bevorzugt mindestens 60cm, besonders bevorzugt mindestens 80cm, besteht.

20. Wirbelstromabscheidevorrichtung nach Anspruch 18 oder 19,
**dadurch gekennzeichnet,**
**dass** der zumindest eine Sortierspalt (5) eine Durchtrittsebene aufweist, in der NE-Gegenstände (12), insbesondere Münzen, den Sortierspalt (5) passieren können, wobei die Durchtrittsebene wenigstens eine Senkrechtkomponente aufweist, welche senkrecht auf einer Zuführebene der Zuführeinrichtung (30) steht.

21. Wirbelstromabscheidevorrichtung nach Anspruch 18 oder 19,
**dadurch gekennzeichnet,**
**dass** der zumindest eine Sortierspalt (5) eine Durchtrittsebene aufweist, in der NE-Gegenstände (12), insbesondere Münzen, den Sortierspalt (5) passieren können, wobei die Durchtrittsebene senkrecht auf einer Zuführebene der Zuführeinrichtung (30) steht.

22. Wirbelstromabscheidevorrichtung nach einem der Ansprüche 18 bis 21,
**gekennzeichnet durch**
eine Zuführeinrichtung (30) mit einer Breite von über 1,50m und einer Sortiervorrichtung mit zwei identischen nebeneinander angeordneten Walzenbaugruppen (44) gemäß dem Anspruch 17.

23. Verwendung einer Sortiervorrichtung (1) nach einem der Ansprüche 1 bis 17 zum Aussortieren von Münzen aus einer Materialschüttung, insbesondere einer Müllverbrennungsschlacke und/oder einer Metallschüttung, besonders bevorzugt einer Schwermetallschüttung und/oder NE-Metallschüttung, insbesondere unter Verwendung einer Wirbelstromabscheidevorrichtung (29).

24. Verwendung einer Wirbelstromabscheidevorrichtung (29) gemäß einem der Ansprüche 18 bis 22 zum Aussortieren von Münzen aus einer Materialschüttung, insbesondere einer Müllverbrennungsschlacke und/oder einer Metallschüttung, besonders bevorzugt einer Schwermetallschüttung und/oder NE-Metallschüttung.

## Claims

1. A sorting device for sorting out coins from bulk material, in particular from waste incineration slag and/or bulk metal, particularly preferably from bulk heavy metal and/or bulk non-ferrous metal, the sorting device comprising at least one sorting gap (5) for coins, each sorting gap being limited by at least one roller (2) which can be rotated about an axis of rotation (A) by means of a drive (33) in such a manner that objects, in particular non-ferrous metal objects (12), that cannot be transported through the sorting gap (5) are subjected to a force in a direction away from the sorting gap (5), in particular also along the axis of rotation (A) of the roller, by the roller (2),
**characterized by**
a discharge hood (6), in particular for an eddy current separating device (29), which has a trajectory separator device (4), in particular an adjustable trajectory separator device, in a hood interior (7), the at least one roller (2) being disposed in or on the discharge hood (6) relative to the trajectory separator device (4) in such a manner that a non-ferrous metal fraction separated out from the bulk material by the trajectory separator device (4) is transported in the direction of the sorting gap (5) by the weight of the non-ferrous metal objects (12).

2. The sorting device according to claim 1,
**characterized in that**
the axis of rotation (A) of the at least one roller (2) extends horizontally parallel to an entry area (8) of the discharge hood (6) or forms an angle of 3° to 5° relative to the horizontal.

3. The sorting device according to claim 1 or 2,
**characterized in that**
the sorting gap (5) is limited by a roller (2) and by a baffle plate (3), in particular made of stainless steel, of the trajectory separator device (4).

4. The sorting device according to any one of claims 1 to 3,
**characterized in that**
the at least one roller (2) is bilaterally mounted by bearing means disposed on both sides, the bearing means (21) being preferably disposed in such a manner that the axis of rotation (A) of the at least one roller (2) extends above a lower edge (42) of the discharge hood (6).

5. The sorting device according to any one of claims 1 to 4,
**characterized in that**
the discharge hood (6) has displacement means (18) for changing the position of at least the baffle plate (3) of the trajectory separator device (4).

6. The sorting device according to claim 4 or 5,
**characterized in that**
the bearing means (21) of the at least one roller (2) are connected to at least one baffle plate (3) of the trajectory separator device (4) in a separable manner, the discharge hood (6) having displacement means (18) for changing the position of the bearing means (21), and the bearing means (21) being movable, in particular displaceable, within the hood interior (7) of the discharge hood (6) together with at least the baffle plate (3) when they are connected.

7. The sorting device according to any one of claims 1 to 5,
**characterized by**
a coin discharge device (40) disposed below the at least one sorting gap (5), the coin discharge device (40) being preferably designed in such a manner that the non-ferrous metal objects, in particular coins, passing through the at least one sorting gap (5) are discharged in a coin discharge direction (R_{C}) toward a side of the sorting device, in particular in a direction opposite to a non-ferrous metal discharge direction (R_{M}), in which the non-ferrous metal objects not passing through the at least one sorting gap are discharged from the sorting device.

8. The sorting device according to claim 1, 4 or 5,
**characterized in that**
the axis of rotation (A) of the at least one roller (2) extends horizontally perpendicular to an entry area (8) of the discharge hood (6) or forms an angle of 3° to 5° relative to the horizontal.

9. The sorting device according to any one of claims 1 to 8,
**characterized in that**
the at least one sorting gap (5) is limited or formed by at least two rollers (2), a drive (33) of the rollers (2) being designed in such a manner that at least two rollers (2) rotate in opposite directions.

10. The sorting device according to claim 9,
**characterized by**
four, preferably six, particularly preferably eight rollers (2), the bearing means (21) being designed in such a manner that a parallel, v-shaped or u-shaped arrangement of the rollers (2) is achieved.

11. The sorting device according to claim 9 or 10,
**characterized in that**
a shared drive (33) for at least two, in particular four, preferably six, particularly preferably eight rollers (2) is provided, opposite rotation of at least two rollers (2) being achieved by means of a gear mechanism (37) connected to the drive (33).

12. The sorting device according to any one of claims 9 to 11,
**characterized in that**
the drive (33) of the rollers (2) is disposed on a side of the at least one roller (2) facing the entry area (8) of the discharge hood (6), in particular within the hood interior (7).

13. The sorting device according to any one of claims 1 to 12,
**characterized in that**
narrowing means (26) are disposed above the rollers (2), preferably perpendicular to the entry area (8) of the discharge hood (6), non-ferrous objects (12) coming from the trajectory separator device (4) being directed in the direction of a central longitudinal axis of the discharge hood (6).

14. The sorting device according to claim 13,
**characterized in that**
on the side facing the rollers, the narrowing means (26) each end at least above an axis of rotation (A) of an outer roller (2).

15. The sorting device according to any one of claims 1 to 14,
**characterized in that**
narrowing means (26) by means of which the non-ferrous objects (12) passing through the sorting gap (5) or the sorting gaps (5) are directed to a shared ejection gap (27) are disposed below the rollers (2).

16. The sorting device according to claim 15,
**characterized in that**
the narrowing means (26) disposed below the rollers (2) are designed in such a manner that the weight of the non-ferrous objects (12) passing through the sorting gap (5) or the sorting gaps (5) enables the non-ferrous objects (12) to exit the ejection gap (27).

17. The sorting device according to any one of the preceding claims,
**characterized by**
two identical roller assemblies (44) disposed side by side, each roller assembly (44) comprising at least two, preferably four, particularly preferably six or eight rollers (2) having corresponding bearing means (21), and each roller assembly (44) comprising in particular its own independent drive (33), which preferably drives two rollers (2) of the respective roller assembly (44) directly.

18. An eddy current separating device comprising a feeder (30), in particular a conveyor belt (31), configured to convey bulk material, in particular waste incineration slag and/or bulk metal, particularly preferably bulk heavy metal and/or bulk non-ferrous metal, the eddy current separating device comprising at least one eddy current device (41) which is disposed at an end of the feeder (30) and which selectively changes the trajectory (11) of non-ferrous objects (12) of the bulk material after they have left the feeder (30), the eddy current separating device (29) having attachment means for attaching a discharge hood (6) disposed downstream of the feeder (30), the eddy current separating device further comprising a sorting device according to any one of claims 1 to 17.

19. The eddy current separating device according to claim 18,
**characterized by**
a frame (34) for spacing the eddy current separating device (29) from a ground (35), the frame (34) being designed in such a manner that there is a distance (D) of at least 40 cm, preferably at least 60 cm, particularly preferably at least 80 cm, between an outlet of the at least one sorting gap (5), in particular between a narrowing means (26) disposed below the rollers (2), and the ground (35).

20. The eddy current separating device according to claim 18 or 19,
**characterized in that**
the at least one sorting gap (5) has a passage plane in which non-ferrous objects (12), in particular coins, can pass through the sorting gap (5), the passage plane having at least a vertical component which is perpendicular to a feeding plane of the feeder (30).

21. The eddy current separating device according to claim 18 or 19,
**characterized in that**
the at least one sorting gap (5) has a passage plane in which non-ferrous objects (12), in particular coins, can pass through the sorting gap (5), the passage plane being perpendicular to a feeding plane of the feeder (30).

22. The eddy current separating device according to any one of claims 18 to 21,
**characterized by**
a feeder (30) having a width of more than 1.50 m and a sorting device having two identical roller assemblies (44) disposed side by side according to claim 17.

23. Use of a sorting device (1) according to any one of claims 1 to 17 for sorting out coins from bulk material, in particular from waste incineration slag and/or bulk metal, particularly preferably from bulk heavy metal and/or bulk non-ferrous metal, in particular using an eddy current separating device (29).

24. Use of an eddy current separating device (29) according to any one of claims 18 to 22 for sorting out coins from bulk material, in particular from waste incineration slag and/or bulk metal, particularly preferably from bulk heavy metal and/or bulk non-ferrous metal.

## Revendications

1. Dispositif de triage destiné à trier des pièces de monnaie d'une charge de matériaux en vrac, notamment d'une fraction de scorie d'incinération des déchets et/ou d'une charge de métaux en vrac, de préférence particulière d'une charge de métaux lourds en vrac et/ou d'une charge de métaux non ferreux en vrac, le dispositif de triage comprenant
au moins une fente de triage (5) pour des pièces de monnaie, chaque fente de triage (5) étant limitée par au moins un rouleau (2) qui peut être tourné autour d'un axe de rotation (A) au moyen d'un entraînement (33) de telle manière qu'une force est appliquée sur des objets, notamment des objets (12) en métaux non ferreux, qui ne peuvent pas être transportés à travers la fente de triage (5), dans une direction qui s'éloigne de la fente de triage (5), notamment également le long de l'axe de rotation (A) du rouleau, par le rouleau (2),
**caractérisé par**
un capot de décharge (6), notamment pour un dispositif (29) de séparation à courant de Foucault, qui a un dispositif (4) de séparation de trajectoire, notamment déplaçable, dans un intérieur de capot (7), l'au moins un rouleau (2) étant disposé dans ou sur le capot de décharge (6) de telle manière par rapport au dispositif (4) de séparation de trajectoire qu'une fraction de métaux non ferreux séparée de la charge de matériaux en vrac par le dispositif (4) de séparation de trajectoire est guidée vers la fente de triage (5) par le poids des objets (12) en métaux non ferreux.

2. Dispositif de triage selon la revendication 1,
**caractérisé en ce que**
l'axe de rotation (A) de l'au moins un rouleau (2) s'étend dans le sens horizontal parallèlement par rapport à une surface d'entrée (8) du capot de décharge (6) ou forme un angle de 3° à 5° par rapport au plan horizontal.

3. Dispositif de triage selon la revendication 1 ou la revendication 2,
**caractérisé en ce que**
la fente de triage (5) est limitée par un rouleau (2) et une chicane (3), notamment en acier inoxydable, du dispositif (4) de séparation de trajectoire.

4. Dispositif de triage selon l'une quelconque des revendications 1 à 3,
**caractérisé en ce que**
l'au moins un rouleau (2) est monté des deux côtés par des moyens de palier qui sont disposés des deux côtés, les moyens de palier (21) étant, de préférence, disposés de telle manière que l'axe de rotation (A) de l'au moins un rouleau (2) s'étend au-dessus d'un bord inférieur (42) du capot de décharge (6).

5. Dispositif de triage selon l'une quelconque des revendications 1 à 4,
**caractérisé en ce que**
le capot de décharge (6) a des moyens de déplacement (18) pour changer la position d'au moins la chicane (3) du dispositif (4) de séparation de trajectoire.

6. Dispositif de triage selon la revendication 4 ou la revendication 5,
**caractérisé en ce que**
les moyens de palier (21) de l'au moins un rouleau (2) sont reliés de manière amovible à au moins une chicane (3) du dispositif (4) de séparation de trajectoire, le capot de décharge (6) ayant des moyens de déplacement (18) pour changer la position des moyens de palier (21), les moyens de palier (21) étant mobiles, notamment déplaçables, conjointement avec au moins la chicane (3) dans l'intérieur de capot (7) du capot de décharge (6) dans un état relié.

7. Dispositif de triage selon l'une quelconque des revendications 1 à 5,
**caractérisé par**
un dispositif (40) de décharge de pièces de monnaie qui est disposé en dessous de l'au moins une fente de triage (5), le dispositif (40) de décharge de pièces de monnaie étant, de préférence, réalisé de telle manière que les objets en métaux non ferreux, notamment des pièces de monnaie, qui passent à travers l'au moins une fente de triage (5) sont déchargés dans une direction (R_{c}) de décharge de pièces de monnaie vers un côté du dispositif de triage, notamment dans une direction opposée à une direction (R_{M}) de décharge de métaux non ferreux, dans laquelle les objets en métaux non ferreux qui ne passent pas à travers l'au moins une fente de triage sont déchargés du dispositif de triage.

8. Dispositif de triage selon la revendication 1, 4 ou 5,
**caractérisé en ce que**
l'axe de rotation (A) de l'au moins un rouleau (2) s'étend dans le sens horizontal perpendiculairement par rapport à une surface d'entrée (8) du capot de décharge (6) ou forme un angle de 3° à 5° par rapport au plan horizontal.

9. Dispositif de triage selon l'une quelconque des revendications 1 à 8,
**caractérisé en ce que**
l'au moins une fente de triage (5) est limitée ou formée par au moins deux rouleaux (2), un entraînement (33) des rouleaux (2) étant réalisé de telle manière qu'au moins deux rouleaux (2) tournent dans des directions opposées.

10. Dispositif de triage selon la revendication 9,
**caractérise par**
quatre, de préférence six, de préférence particulière huit, rouleaux (2), les moyens de palier (21) étant réalisés de telle manière qu'une disposition parallèle, en forme de V ou en forme de U est atteinte.

11. Dispositif de triage selon la revendication 9 ou la revendication 10,
**caractérisé en ce**
**qu'**un entraînement (33) commun est prévu pour au moins deux, notamment quatre, de préférence six, de préférence particulière huit, rouleaux (2), la rotation dans des directions opposées d'au moins deux rouleaux (2) étant atteinte au moyen d'une transmission (37) qui est reliée à l'entraînement (33).

12. Dispositif de triage selon l'une quelconque des revendications 9 à 11,
**caractérisé en ce que**
l'entraînement (33) des rouleaux (2) est disposé sur un côté de l'au moins un rouleau (2) qui est tourné vers la surface d'entrée (8) du capot de décharge (6), notamment dans l'intérieur de capot (7).

13. Dispositif de triage selon l'une quelconque des revendications 1 à 12,
**caractérise en ce que**
des moyens de rétrécissement (26) sont disposés au-dessus des rouleaux (2), notamment perpendiculairement par rapport à la surface d'entrée (8) du capot de décharge (6), de sorte que des objets (12) en métaux non ferreux qui viennent du dispositif (4) de séparation de trajectoire sont dirigés vers un axe longitudinal central du capot de décharge (6).

14. Dispositif de triage selon la revendication 13,
**caractérisé en ce que**
sur le côté tourné vers les rouleaux, les moyens de rétrécissement (26) chacun se terminent au moins au-dessus d'un axe de rotation (A) d'un rouleau (2) extérieur.

15. Dispositif de triage selon l'une quelconque des revendications 1 à 14,
**caractérisé en ce que**
des moyens de rétrécissement (26) sont disposés en dessous des rouleaux (2), les objets (12) en métaux non ferreux qui passent à travers la fente de triage (5) ou les fentes de triage (5) étant dirigés vers une fente d'éjection (27) commune au moyen des moyens de rétrécissement (26).

16. Dispositif de triage selon la revendication 15,
**caractérisé en ce que**
les moyens de rétrécissement (26) qui sont disposés en dessous des rouleaux (2) sont réalisés de telle manière que le poids des objets (12) en métaux non ferreux qui passent à travers la fente de triage (5) ou les fentes de triage (5) permet une sortie de la fente d'éjection (27).

17. Dispositif de triage selon l'une quelconque des revendications précédentes,
**caractérisé par**
deux ensembles de rouleau (44) identiques qui sont disposés l'un à côté de l'autre, chaque ensemble de rouleau (44) comprenant au moins deux, de préférence quatre, de préférence particulière six ou huit, rouleaux (2) ayant des moyens de palier (21) correspondants et notamment chaque ensemble de rouleau (44) comprenant son propre entraînement (33) indépendant qui entraîne directement, de préférence, deux rouleaux (2) de l'ensemble de rouleau (44) respectif.

18. Dispositif de séparation à courant de Foucault comprenant un dispositif d'alimentation (30), notamment une bande de transport (31), qui est configuré(e) pour transporter une charge de matériaux en vrac, notamment une fraction de scorie d'incinération des déchets et/ou une charge de métaux en vrac, de préférence particulière une charge de métaux lourds en vrac et/ou une charge de métaux non ferreux en vrac, le dispositif de séparation à courant de Foucault comprenant au moins un dispositif à courant de Foucault (41) qui est disposé à une extrémité du dispositif d'alimentation (30) et qui influence la trajectoire (11) des objets (12) en métaux non ferreux de la charge de matériaux en vrac de manière sélective après la sortie du dispositif d'alimentation (30), le dispositif (29) de séparation à courant de Foucault ayant des moyens de fixation destinés à fixer un capot de décharge (6) disposé en aval du dispositif d'alimentation (30), le dispositif de séparation à courant de Foucault comprenant en outre un dispositif de triage selon l'une quelconque des revendications 1 à 17.

19. Dispositif de séparation à courant de Foucault selon la revendication 18,
**caractérisé par**
un support (34) destiné à espacer le dispositif (29) de séparation à courant de Foucault d'un fond (35), le support (34) étant réalisé de telle manière qu'il y a une distance (D) d'au moins 40 cm, de préférence d'au moins 60 cm, de préférence particulière d'au moins 80 cm, entre une sortie de l'au moins une fente de triage (5), notamment entre un moyen de rétrécissement (26) disposé en dessous des rouleaux (2), et le fond (35).

20. Dispositif de séparation à courant de Foucault selon la revendication 18 ou la revendication 19,
**caractérisé en ce que**
l'au moins une fente de triage (5) a un plan de passage dans lequel des objets (12) en métaux non ferreux, notamment des pièces de monnaie, peuvent passer à travers la fente de triage (5), le plan de passage ayant au moins une composante perpendiculaire qui est perpendiculaire à un plan d'alimentation du dispositif d'alimentation (30).

21. Dispositif de séparation à courant de Foucault selon la revendication 18 ou la revendication 19,
**caractérisé en ce que**
l'au moins une fente de triage (5) a un plan de passage dans lequel des objets (12) en métaux non ferreux, notamment des pièces de monnaie, peuvent passer à travers la fente de triage (5), le plan de passage étant perpendiculaire à un plan d'alimentation du dispositif d'alimentation (30).

22. Dispositif de séparation à courant de Foucault selon l'une quelconque des revendications 18 à 21,
**caractérisé par**
un dispositif d'alimentation (30) qui a une largeur de plus de 1,50 m et par un dispositif de triage qui a au moins deux ensembles de rouleau (44) identiques disposés l'un à côté de l'autre selon la revendication 17.

23. Utilisation d'un dispositif de triage (1) selon l'une quelconque des revendications 1 à 17 pour trier des pièces de monnaie d'une charge de matériaux en vrac, notamment d'une fraction de scorie d'incinération des déchets et/ou d'une charge de métaux en vrac, de préférence particulière d'une charge de métaux lourds en vrac et/ou d'une charge de métaux non ferreux en vrac, notamment en utilisant un dispositif (29) de séparation à courant de Foucault.

24. Utilisation d'un dispositif (29) de séparation à courant de Foucault selon l'une quelconque des revendications 18 à 22 pour trier des pièces de monnaie d'une charge de matériaux en vrac, notamment d'une fraction de scorie d'incinération des déchets et/ou d'une charge de métaux en vrac, de préférence particulière d'une charge de métaux lourds en vrac et/ou d'une charge de métaux non ferreux en vrac.
